# EUROPEAN PATENT SPECIFICATION

(11) **EP 3 767 890 B1**
(45) Date of publication and mention of the grant of the patent: **18.01.2023**
(21) Application number: 19784998.7
(22) Date of filing: 12.03.2019
(51) Int. Cl.: H04L 43/026, H04L 43/028, H04L 43/18, H04L 43/0852, H04L 43/0829, H04L 43/0811, H04L 43/106, H04L 41/5009, H04L 41/142, H04L 43/16, H04L 41/0893

(54) **METHOD AND APPARATUS FOR MONITORING SERVICE QUALITY**
VERFAHREN UND VORRICHTUNG ZUR DIENSTQUALITÄTSÜBERWACHUNG
PROCÉDÉ ET APPAREIL DE SURVEILLANCE DE LA QUALITÉ DE SERVICE

(30) Priority: 08.04.2018 CN 201810308311
(43) Date of publication of application: 20.01.2021
(73) Proprietor: HUAWEI TECHNOLOGIES CO., LTD., Shenzhen, Guangdong 518129 (CN)
(72) Inventor: ZHOU, Han, Shenzhen, Guangdong 518129 (CN)
(74) Representative: Pfenning, Meinig & Partner mbB
(86) International application number: PCT/CN2019/077772
(87) International publication number: WO 2019/196585

(56) References cited:
- EP-A1- 2 654 366
- WO-A1-2015/184740
- CN-A- 102 916 883
- CN-A- 107 872 356
- US-A1- 2007 097 936
- US-A1- 2011 019 551
- US-A1- 2014 105 044
- US-A1- 2016 352 538
- US-A1- 2017 099 195
- US-A1- 2017 099 197

## Description

### TECHNICAL FIELD

This application relates to the field of communications technologies, and in particular, to a quality-of-service monitoring method and apparatus.

### BACKGROUND

Currently, to implement quality-of-service monitoring of a service between a terminal and a user plane function (user plane function, UPF for short) device, the terminal (or the UPF device) periodically sends a monitoring packet, and after receiving the monitoring packet, the UPF device (or the terminal) calculates quality of service of the service based on the monitoring packet. For example, the UPF device (or the terminal) calculates a delay and a jitter of the service based on an arrival time of the monitoring packet, and calculates a packet loss rate of the service based on a counted quantity of received packets that is carried in the monitoring packet. US 2016/352538 A1 describes a step of determining a tunnel interface corresponding to a service entity to which an incoming packet is to be directed, wherein the incoming packet can be encapsulated based on a tunnel configuration corresponding to the tunnel interface to generate an encapsulated packet, and the encapsulated packet can be sent to the service entity through the tunnel interface for network service insertion.

In a quality-of-service monitoring process, a large quantity of monitoring packets need to be transmitted between the terminal and the UPF device. Therefore, load of a network system is greatly increased.

### SUMMARY

Embodiments of the present invention are defined by the independent claims. Preferred embodiments of the present invention are defined by the dependent claims. Embodiments of this application provide a quality-of-service monitoring method and apparatus, to resolve a problem that load of a network system is greatly increased because a large quantity of monitoring packets need to be transmitted between a terminal and a UPF device.

According to a first aspect, a quality-of-service monitoring method is provided, including: either determining, by a first node, that a service packet of a first service is not obtained within a preset time, and generating a monitoring packet, or obtaining, by the first node, the service packet of the first service; determining, by the first node, that the service packet of the first service is obtained within the preset time; and encapsulating, by the first node, the service packet to obtain the monitoring packet, where the monitoring packet is usable for monitoring quality of service of the first service; wherein the method further comprises sending, by the first node, the monitoring packet to a second node. According to the method provided in the first aspect, the first node may encapsulate the service packet to obtain the monitoring packet, to monitor the quality of service of the service. Because the monitoring packet is obtained by encapsulating the service packet, the first node can monitor the quality of service by using the service packet, avoiding an increase in load of a network system.

When the first node can obtain the service packet of the first service, the first node can monitor the quality of service of the first service by using the service packet, thereby avoiding an increase in the load of the network system.

In a possible implementation, the encapsulating, by the first node, the service packet includes: adding, by the first node, at least one of the following information: first indication information and first parameter information, to the service packet, where the first indication information indicates that the monitoring packet is obtained by encapsulating the service packet, and the first parameter information is usable for monitoring the quality of service of the first service. In this possible implementation, if the first node adds the first parameter information to the service packet, the second node can monitor the quality of service of the first service based on the first parameter information, thereby avoiding an increase in the load of the network system by monitoring the quality of service by using the service packet.

In a possible implementation, the monitoring packet includes at least one of the following information: a protocol header in a same format as the service packet and a first field including the first indication information, where the first indication information indicates that the monitoring packet is obtained by encapsulating the service packet. In this possible implementation, if the monitoring packet includes the first indication information, the second node can obtain the service packet of the first service based on the first indication information, thereby ensuring correct transmission of the service packet.

In a possible implementation, the monitoring packet includes a protocol header in a same format as the service packet, the protocol header includes the first indication information, and the first indication information indicates that the monitoring packet is obtained by encapsulating the service packet. In this possible implementation, the second node can obtain the service packet of the first service based on the first indication information, thereby ensuring correct transmission of the service packet.

In a possible implementation, the monitoring packet includes the first parameter information, and the first parameter information is usable for monitoring the quality of service of the first service. In this possible implementation, the second node can monitor the quality of service of the first service based on the first parameter information, thereby avoiding an increase in the load of the network system by monitoring the quality of service by using the service packet.

In a possible implementation, the method further includes: learning of, by the first node from a control plane device, a generation manner of the monitoring packet, where the generation manner is generating the monitoring packet by using the service packet. In this possible implementation, the first node may determine, based on the generation manner of the monitoring packet, to generate the monitoring packet by using the service packet. Therefore, the first node can monitor the quality of service by using the service packet, thereby avoiding an increase in the load of the network system.

In a possible implementation, a period for sending the monitoring packet by the first node is T. In this possible implementation, the first node may periodically send the monitoring packet to the second node, to monitor the quality of service of the first service in real time.

In a possible implementation, the method further includes: learning of, by the first node, T from the control plane device. In this possible implementation, the first node can periodically send the monitoring packet to the second node, to monitor the quality of service of the first service in real time.

In a possible implementation, the first node is a terminal, the second node is a UPF device, the monitoring packet is an uplink monitoring packet, and the method further includes: receiving, by the first node, first period information from the second node, where the first period information indicates a period for sending a downlink monitoring packet by the second node; and determining, by the first node, T based on the first period information. In this possible implementation, the first node can determine T by using a user plane packet, and this can reduce a quantity of pieces of signaling compared with a manner in which the first node determines T by using control plane signaling.

In a possible implementation, the first node is a terminal, the second node is a UPF device, the first parameter information is parameter information carried in an uplink monitoring packet, and the method further includes: receiving, by the first node, second parameter information from the second node, where the second parameter information is parameter information carried in a downlink monitoring packet sent by the second node; and determining, by the first node, the first parameter information based on the second parameter information. In this possible implementation, the first node can determine the first parameter information by using a user plane packet, and this can reduce a quantity of pieces of signaling compared with a manner in which the first node determines the first parameter information by using control plane signaling.

In a possible implementation, the first node is a UPF device, and the first indication information is included in a protocol header of a GTP layer of the monitoring packet; or the first node is a terminal, and the first indication information is included in a protocol header of an SDAP layer or a PDCP layer of the monitoring packet; or the first node is a base station, the second node is a terminal, and the first indication information is included in a protocol header of an SDAP layer or a PDCP layer of the monitoring packet; or the first node is a base station, the second node is a UPF device, and the first indication information is included in a protocol header of a GTP layer of the monitoring packet.

In a possible implementation, in the first node and the second node, one node is a terminal, and the other node is a UPF device or a base station; or in the first node and the second node, one node is a UPF device, and the other node is a base station.

According to a second aspect, a quality-of-service monitoring method is provided, including: receiving, by a second node, a monitoring packet from a first node, where the monitoring packet includes a service packet of a first service; monitoring, by the second node, quality of service of the first service based on the monitoring packet; and obtaining, by the second node, the service packet in the monitoring packet. According to the method provided in the second aspect, the second node may monitor the quality of service based on the service packet, thereby avoiding an increase in load of a network system.

In a possible implementation, the monitoring packet includes first indication information, the first indication information indicates that the monitoring packet is obtained by encapsulating the service packet, and the method further includes: determining, by the second node based on the first indication information, that the monitoring packet is obtained by encapsulating the service packet. In this possible implementation, the second node can obtain the service packet of the first service based on the first indication information, thereby ensuring correct transmission of the service packet.

In a possible implementation, the monitoring packet includes at least one of the following information: a protocol header in a same format as the service packet and a first field including the first indication information, where the first indication information indicates that the monitoring packet is obtained by encapsulating the service packet. In this possible implementation, the second node can obtain the service packet of the first service based on the first indication information, thereby ensuring correct transmission of the service packet.

In a possible implementation, the monitoring packet includes a protocol header in a same format as the service packet, the protocol header includes the first indication information, and the first indication information indicates that the monitoring packet is obtained by encapsulating the service packet. In this possible implementation, the second node can obtain the service packet of the first service based on the first indication information, thereby ensuring correct transmission of the service packet.

In a possible implementation, the monitoring packet includes first parameter information, the first parameter information is usable for monitoring the quality of service of the first service, and the monitoring, by the second node, quality of service of the first service based on the monitoring packet includes: monitoring, by the second node, the quality of service of the first service based on the first parameter information included in the monitoring packet and a local context of the monitoring packet. In this possible implementation, the second node can monitor the quality of service of the first service based on the first parameter information, thereby avoiding an increase in the load of the network system by monitoring the quality of service by using the service packet.

In a possible implementation, the monitoring packet includes a first identifier, there is a correspondence between the first identifier and the local context of the monitoring packet, and the method further includes: determining, by the second node, the local context of the monitoring packet based on the first identifier included in the monitoring packet and the correspondence.

In a possible implementation, the second node is a UPF device, the first node is a terminal, and the method further includes: sending, by the second node, first period information to the first node, where the first period information indicates a period for sending a downlink monitoring packet by the second node, and the first period information is used to determine a period for sending an uplink monitoring packet by the first node. In this possible implementation, the first node can determine T by using a user plane packet, and this can reduce a quantity of pieces of signaling compared with a manner in which the first node determines T by using control plane signaling.

In a possible implementation, the second node is a UPF device, the first node is a terminal, and the method further includes: sending, by the second node, second parameter information to the first node, where the second parameter information is parameter information carried in the downlink monitoring packet sent by the second node, the second parameter information is used to determine the first parameter information carried in the uplink monitoring packet sent by the first node, and both the first parameter information and the second parameter information are used to monitor the quality of service of the first service. In this possible implementation, the first node can determine the first parameter information by using a user plane packet, and this can reduce a quantity of pieces of signaling compared with a manner in which the first node determines the first parameter information by using control plane signaling.

In a possible implementation, the second node is a UPF device, and the first indication information is included in a protocol header of a GTP layer of the monitoring packet; or the second node is a terminal, and the first indication information is included in a protocol header of an SDAP layer or a PDCP layer of the monitoring packet; or the second node is a base station, the first node is a terminal, and the first indication information is included in a protocol header of an SDAP layer or a PDCP layer of the monitoring packet; or the second node is a base station, the first node is a UPF device, and the first indication information is included in a protocol header of a GTP layer of the monitoring packet.

In a possible implementation, in the second node and the first node, one node is a terminal, and the other node is a UPF device or a base station; or in the second node and the first node, one node is a UPF device, and the other node is a base station.

According to a third aspect, a quality-of-service monitoring method is provided, including: attempting to obtain, by a first node, a service packet of a first service; determining, by the first node, that the service packet of the first service is not obtained within a preset time; generating, by the first node, a monitoring packet, where the monitoring packet is usable for monitoring quality of service of the first service; and sending, by the first node, the monitoring packet to a second node. According to the method provided in the third aspect, the first node generates the monitoring packet when the service packet of the first service is not obtained, so that continuity of monitoring of the quality of service of the first service can be ensured.

In a possible implementation, the monitoring packet includes at least one of the following information: a protocol header in a same format as the service packet and a second field including second indication information, where the second indication information indicates that the monitoring packet is generated by the first node. In this possible implementation, if the monitoring packet includes the second indication information, the second node can determine, based on the second indication information, that the monitoring packet is generated by the first node. In this case, the second node only needs to monitor the quality of service of the first service based on the monitoring packet.

In a possible implementation, the monitoring packet includes a protocol header in a same format as the service packet, the protocol header includes second indication information, and the second indication information indicates that the monitoring packet is generated by the first node. In this possible implementation, the second node can determine, based on the second indication information, that the monitoring packet is generated by the first node. In this case, the second node only needs to monitor the quality of service of the first service based on the monitoring packet.

In a possible implementation, the monitoring packet includes first parameter information, and the first parameter information is usable for monitoring the quality of service of the first service.

In a possible implementation, a period for sending the monitoring packet by the first node is T. In this possible implementation, the first node can periodically send the monitoring packet to the second node, to monitor the quality of service of the first service in real time.

In a possible implementation, the method further includes: learning of, by the first node, T from a control plane device. In this possible implementation, the first node can periodically send the monitoring packet to the second node, to monitor the quality of service of the first service in real time.

In a possible implementation, the first node is a terminal, the second node is a UPF device, the monitoring packet is an uplink monitoring packet, and the method further includes: receiving, by the first node, first period information from the second node, where the first period information indicates a period for sending a downlink monitoring packet by the second node; and determining, by the first node, T based on the first period information. In this possible implementation, the first node can determine T by using a user plane packet, and this can reduce a quantity of pieces of signaling compared with a manner in which the first node determines T by using control plane signaling.

In a possible implementation, the first node is a terminal, the second node is a UPF device, the first parameter information is parameter information carried in an uplink monitoring packet, and the method further includes: receiving, by the first node, second parameter information from the second node, where the second parameter information is parameter information carried in a downlink monitoring packet sent by the second node; and determining, by the first node, the first parameter information based on the second parameter information. In this possible implementation, the first node can determine the first parameter information by using a user plane packet, and this can reduce a quantity of pieces of signaling compared with a manner in which the first node determines the first parameter information by using control plane signaling.

In a possible implementation, the first node is a UPF device, and the second indication information is included in a protocol header of a GTP layer of the monitoring packet; or the first node is a terminal, and the second indication information is included in a protocol header of an SDAP layer or a PDCP layer of the monitoring packet; or the first node is a base station, the second node is a terminal, and the second indication information is included in a protocol header of an SDAP layer or a PDCP layer of the monitoring packet; or the first node is a base station, the second node is a UPF device, and the second indication information is included in a protocol header of a GTP layer of the monitoring packet.

In a possible implementation, in the first node and the second node, one node is a terminal, and the other node is a UPF device or a base station; or in the first node and the second node, one node is a UPF device, and the other node is a base station.

According to a fourth aspect, a quality-of-service monitoring method is provided, including: receiving, by a second node, a monitoring packet from a first node, where the monitoring packet includes second indication information, and the second indication information indicates that the monitoring packet is generated by the first node; and determining, by the second node based on the second indication information, that the monitoring packet is generated by the first node; and monitoring, by the second node, quality of service of a first service based on the monitoring packet. According to the method provided in the fourth aspect, when the first node does not obtain a service packet of the first service, the first node generates the monitoring packet and sends the monitoring packet to the second node, so that continuity of monitoring of the quality of service of the first service by the second node can be ensured.

In a possible implementation, the monitoring packet includes at least one of the following information: a protocol header in a same format as the service packet and a second field including the second indication information, where the second indication information indicates that the monitoring packet is generated by the first node. In this possible implementation, if the monitoring packet includes the second indication information, the second node can determine, based on the second indication information, that the monitoring packet is generated by the first node. In this case, the second node only needs to monitor the quality of service of the first service based on the monitoring packet.

In a possible implementation, the monitoring packet includes a protocol header in a same format as the service packet, the protocol header includes the second indication information, and the second indication information indicates that the monitoring packet is generated by the first node. In this possible implementation, the second node can determine, based on the second indication information, that the monitoring packet is generated by the first node. In this case, the second node only needs to monitor the quality of service of the first service based on the monitoring packet.

In a possible implementation, the monitoring packet includes first parameter information, the first parameter information is usable for monitoring the quality of service of the first service, and the monitoring, by the second node, quality of service of a first service based on the monitoring packet includes: monitoring, by the second node, the quality of service of the first service based on the first parameter information included in the monitoring packet and a local context of the monitoring packet.

In a possible implementation, the monitoring packet includes a first identifier, there is a correspondence between the first identifier and the local context of the monitoring packet, and the method further includes: determining, by the second node, the local context of the monitoring packet based on the first identifier included in the monitoring packet and the correspondence.

In a possible implementation, the second node is a UPF device, the first node is a terminal, and the method further includes: sending, by the second node, first period information to the first node, where the first period information indicates a period for sending a downlink monitoring packet by the second node, and the first period information is used to determine a period for sending an uplink monitoring packet by the first node. In this possible implementation, the first node can determine T by using a user plane packet, and this can reduce a quantity of pieces of signaling compared with a manner in which the first node determines T by using control plane signaling.

In a possible implementation, the second node is a UPF device, the first node is a terminal, and the method further includes: sending, by the second node, second parameter information to the first node, where the second parameter information is parameter information carried in the downlink monitoring packet sent by the second node, the second parameter information is used to determine the first parameter information carried in the uplink monitoring packet sent by the first node, and both the first parameter information and the second parameter information are used to monitor the quality of service of the first service. In this possible implementation, the first node can determine the first parameter information by using a user plane packet, and this can reduce a quantity of pieces of signaling compared with a manner in which the first node can determine the first parameter information by using control plane signaling.

In a possible implementation, the second node is a UPF device, and the second indication information is included in a protocol header of a GTP layer of the monitoring packet; or the second node is a terminal, and the second indication information is included in a protocol header of an SDAP layer or a PDCP layer of the monitoring packet; or the second node is a base station, the first node is a terminal, and the second indication information is included in a protocol header of an SDAP layer or a PDCP layer of the monitoring packet; or the second node is a base station, the first node is a UPF device, and the second indication information is included in a protocol header of a GTP layer of the monitoring packet.

In a possible implementation, in the second node and the first node, one node is a terminal, and the other node is a UPF device or a base station; or in the second node and the first node, one node is a UPF device, and the other node is a base station.

According to a fifth aspect, a quality-of-service monitoring apparatus is provided, including a processing unit and a communications unit, where the processing unit is configured to obtain a service packet of a first service; the processing unit is further configured to encapsulate the service packet to obtain a monitoring packet, where the monitoring packet is usable for monitoring quality of service of the first service; and the communications unit is configured to send the monitoring packet to a second node.

In a possible implementation, the processing unit is further configured to determine that the service packet of the first service is obtained within a preset time.

In a possible implementation, the processing unit is specifically configured to add at least one of the following information: first indication information and first parameter information, to the service packet, where the first indication information indicates that the monitoring packet is obtained by encapsulating the service packet, and the first parameter information is usable for monitoring the quality of service of the first service.

In a possible implementation, the monitoring packet includes at least one of the following information: a protocol header in a same format as the service packet and a first field including the first indication information, where the first indication information indicates that the monitoring packet is obtained by encapsulating the service packet.

In a possible implementation, the monitoring packet includes a protocol header in a same format as the service packet, the protocol header includes the first indication information, and the first indication information indicates that the monitoring packet is obtained by encapsulating the service packet.

In a possible implementation, the monitoring packet includes first parameter information, and the first parameter information is usable for monitoring the quality of service of the first service.

In a possible implementation, the communications unit is further configured to learn of a generation manner of the monitoring packet from a control plane device, where the generation manner is generating the monitoring packet by using the service packet.

In a possible implementation, a period for sending the monitoring packet by the apparatus is T.

In a possible implementation, the communications unit is further configured to learn of T from the control plane device.

In a possible implementation, the apparatus is a terminal, the second node is a UPF device, the monitoring packet is an uplink monitoring packet, the communications unit is further configured to receive first period information from the second node, where the first period information indicates a period for sending a downlink monitoring packet by the second node, and the processing unit is further configured to determine T based on the first period information.

In a possible implementation, the apparatus is a terminal, the second node is a UPF device, the first parameter information is parameter information carried in the uplink monitoring packet, the communications unit is further configured to receive second parameter information from the second node, where the second parameter information is parameter information carried in the downlink monitoring packet sent by the second node, and the processing unit is further configured to determine the first parameter information based on the second parameter information.

In a possible implementation, the apparatus is a UPF device, and the first indication information is included in a protocol header of a GTP layer of the monitoring packet; or the apparatus is a terminal, and the first indication information is included in a protocol header of an SDAP layer or a PDCP layer of the monitoring packet; or the apparatus is a base station, the second node is a terminal, and the first indication information is included in a protocol header of an SDAP layer or a PDCP layer of the monitoring packet; or the apparatus is a base station, the second node is a UPF device, and the first indication information is included in a protocol header of a GTP layer of the monitoring packet.

In a possible implementation, in the first node and the second node, one node is a terminal, and the other node is a UPF device or a base station; or in the first node and the second node, one node is a UPF device, and the other node is a base station.

According to a sixth aspect, a quality-of-service monitoring apparatus is provided, including a communications unit and a processing unit, where the communications unit is configured to receive a monitoring packet from a first node, where the monitoring packet includes a service packet of a first service; the processing unit is configured to monitor quality of service of the first service based on the monitoring packet; and the processing unit is further configured to obtain the service packet in the monitoring packet.

In a possible implementation, the monitoring packet includes first indication information, and the first indication information indicates that the monitoring packet is obtained by encapsulating the service packet; and the processing unit is further configured to determine, based on the first indication information, that the monitoring packet is obtained by encapsulating the service packet.

In a possible implementation, the monitoring packet includes at least one of the following information: a protocol header in a same format as the service packet and a first field including the first indication information, where the first indication information indicates that the monitoring packet is obtained by encapsulating the service packet.

In a possible implementation, the monitoring packet includes a protocol header in a same format as the service packet, the protocol header includes the first indication information, and the first indication information indicates that the monitoring packet is obtained by encapsulating the service packet.

In a possible implementation, the monitoring packet includes first parameter information, the first parameter information is usable for monitoring the quality of service of the first service, and the processing unit is specifically configured to monitor the quality of service of the first service based on the first parameter information included in the monitoring packet and a local context of the monitoring packet.

In a possible implementation, the monitoring packet includes a first identifier, and there is a correspondence between the first identifier and the local context of the monitoring packet; and the processing unit is further configured to determine the local context of the monitoring packet based on the first identifier included in the monitoring packet and the correspondence.

In a possible implementation, the apparatus is a UPF device, and the first node is a terminal; and the communications unit is further configured to send first period information to the first node, where the first period information indicates a period for sending a downlink monitoring packet by the apparatus, and the first period information is used to determine a period for sending an uplink monitoring packet by the first node.

In a possible implementation, the apparatus is a UPF device, and the first node is a terminal; the communications unit is further configured to send second parameter information to the first node, where the second parameter information is parameter information carried in the downlink monitoring packet sent by the apparatus, and the second parameter information is used to determine the first parameter information carried in the uplink monitoring packet sent by the first node; and both the first parameter information and the second parameter information are used to monitor the quality of service of the first service.

In a possible implementation, the apparatus is a UPF device, and the first indication information is included in a protocol header of a GTP layer of the monitoring packet; or the apparatus is a terminal, and the first indication information is included in a protocol header of an SDAP layer or a PDCP layer of the monitoring packet; or the apparatus is a base station, the first node is a terminal, and the first indication information is included in a protocol header of an SDAP layer or a PDCP layer of the monitoring packet; or the apparatus is a base station, the first node is a UPF device, and the first indication information is included in a protocol header of a GTP layer of the monitoring packet.

In a possible implementation, in the second node and the first node, one node is a terminal, and the other node is a UPF device or a base station; or in the second node and the first node, one node is a UPF device, and the other node is a base station.

According to a seventh aspect, a quality-of-service monitoring apparatus is provided. The apparatus has a function of implementing any method provided in the third aspect. The function may be implemented by hardware, or by hardware executing corresponding software. The hardware or the software includes one or more units corresponding to the foregoing function. The apparatus may exist in a form of a chip product.

According to an eighth aspect, a quality-of-service monitoring apparatus is provided. The apparatus has a function of implementing any method provided in the fourth aspect. The function may be implemented by hardware, or by hardware executing corresponding software. The hardware or the software includes one or more units corresponding to the foregoing function. The apparatus may exist in a form of a chip product.

According to a ninth aspect, a quality-of-service monitoring apparatus is provided, including a memory and a processor, where the memory is configured to store a computer executable instruction, and the processor executes the computer executable instruction stored in the memory, so that the apparatus implements any method provided in the first aspect or the third aspect. The apparatus may exist in a form of a chip product.

According to a tenth aspect, a quality-of-service monitoring apparatus is provided, including a memory and a processor, where the memory is configured to store a computer executable instruction, and the processor executes the computer executable instruction stored in the memory, so that the apparatus implements any method provided in the second aspect or the fourth aspect. The apparatus may exist in a form of a chip product.

According to an eleventh aspect, a computer readable storage medium is provided, including an instruction, where when the instruction is run on a computer, the computer is enabled to perform any method provided in the first aspect or the third aspect. According to a twelfth aspect, a computer readable storage medium is provided, including an instruction, where when the instruction is run on a computer, the computer is enabled to perform any method provided in the second aspect or the fourth aspect.

According to a thirteenth aspect, a computer program product including an instruction is provided, where when the computer program product is run on a computer, the computer is enabled to perform any method provided in the first aspect or the third aspect.

According to a fourteenth aspect, a computer program product including an instruction is provided, where when the computer program product is run on a computer, the computer is enabled to perform any method provided in the second aspect or the fourth aspect.

For beneficial effects of any implementation of any one of the fifth aspect to the fourteenth aspect, refer to beneficial effects of corresponding implementations of the first aspect to the fourth aspect. Details are not described herein again.

### BRIEF DESCRIPTION OF DRAWINGS

FIG. 1 is a schematic diagram of a QoS flow according to an embodiment of this application;
FIG. 2 is a schematic diagram of a hardware structure of a communications apparatus according to an embodiment of this application;
FIG. 3 is a schematic architectural diagram of a 5G network according to an embodiment of this application;
FIG. 4 is a schematic architectural diagram of an EPS network according to an embodiment of this application;
FIG. 5 is a schematic diagram of a service flow according to an embodiment of this application;
FIG. 6 is a schematic diagram of loopback monitoring according to an embodiment of this application;
FIG. 7 is a schematic diagram of a protocol stack according to an embodiment of this application;
FIG. 8 is a flowchart of a method for configuring a local context in a node according to an embodiment of this application;
FIG. 9 is a flowchart of a quality-of-service monitoring method according to an embodiment of this application;
FIG. 10 is a schematic diagram of a packet structure according to an embodiment of this application;
FIG. 11 is a schematic diagram of another packet structure according to an embodiment of this application;
FIG. 12 is a schematic diagram of another packet structure according to an embodiment of this application;
FIG. 13 is a schematic diagram of another packet structure according to an embodiment of this application;
FIG. 14 is a schematic diagram of still another packet structure according to an embodiment of this application; and
FIG. 15 is a schematic structural diagram of a communications apparatus according to an embodiment of this application.

### DESCRIPTION OF EMBODIMENTS

The following describes the technical solutions in the embodiments of this application with reference to the accompanying drawings in the embodiments of this application. In the descriptions of this application, "/" means "or", unless otherwise specified. For example, A/B may represent A or B. The term "and/or" in this specification describes only an association relationship for associated objects and represents that three relationships may exist. For example, A and/or B may represent the following three cases: Only A exists, both A and B exist, and only B exists. In addition, in the descriptions of this application, "a plurality of" means two or more than two. In addition, to clearly describe the technical solutions in the embodiments of this application, in the embodiments of this application, terms such as "first" and "second" are used to distinguish between same items or similar items that have basically same functions and roles. A person skilled in the art may understand that the terms such as "first" and "second" do not limit a quantity and an execution sequence, and the terms such as "first" and "second" do not necessarily have different limitations.

To meet challenges of wireless broadband technologies and maintain a leading advantage of a 3rd generation partnership project (3rd generation partnership project, 3GPP for short) network, the 3GPP standard group formulated in late 2016 a next generation mobile communications system (next generation system) network architecture, which is referred to as a 5th generation (5th generation, 5G for short) network architecture.

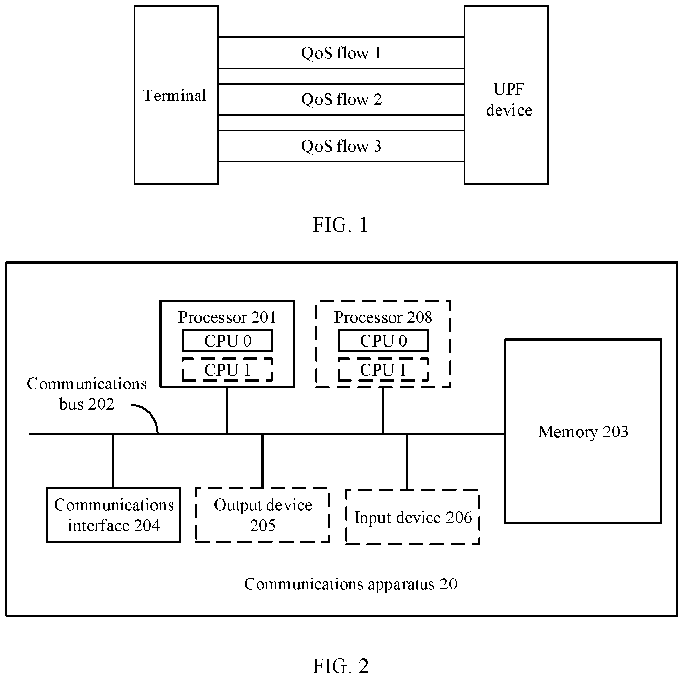

The 5G network architecture defines an ultra-reliable low latency communication (ultra-reliable low latency communication, URLLC for short) scenario, mainly including services that require a low latency and highly-reliable connectivity, such as unmanned driving, industrial automation, and a smart grid. The foregoing services are carried by using different quality of service (quality of service, QoS for short) flows (Flow) in a 5G network. As shown in FIG. 1, a QoS flow 1, a QoS flow 2, and a QoS flow 3 may be included between a terminal and a UPF entity. Different QoS flows may have different service requirements, for example, a delay, a packet loss rate, or a jitter.

Because most services in the foregoing URLLC scenario are services related to life safety or production safety, no error is allowed. However, from a perspective of network construction, a delay, an error, or even a network fault is always inevitable. Therefore, when the 5G network is used to serve the foregoing services related to life safety or production safety, the 5G network needs to provide real-time quality of service (also referred to as quality of service of a service) monitoring. In this way, when the quality of service does not meet a preset condition, corresponding adjustment measures or protection measures may be taken. For example, the existing 5G technical specification (technical standards, TS for short) 22.186 stipulates that in a remote driving scenario, an end-to-end delay between a terminal and a server needs to always remain within 5 ms, and if it can be detected in time that quality of service does not meet a preset condition, a vehicle may be controlled to switch from a remote driving mode to an autonomous driving mode, so that an accident caused by a network fault can be avoided.

In the prior art, to monitor a service-level agreement (service-level agreement, SLA for short) of a URLLC service (represented by a delay, a jitter, a packet loss rate, or the like), a terminal and/or a UPF device construct/constructs a monitoring packet based on a specific frequency. To achieve real-time monitoring, a monitoring packet sending frequency is directly proportional to a delay indicator of the URLLC service. To be specific, a higher requirement of the delay indicator the URLLC service indicates a higher monitoring packet frequency and more accurate quality of service obtained through monitoring. However, a higher monitoring packet frequency indicates that the terminal and/or the UPF device need/needs to generate more monitoring packets, causing load to a network system. Especially when the network system is already in a high-load or congested state, a large quantity of monitoring packets further increases network load or congestion, and consequently, services may be affected.

To prevent a large quantity of monitoring packets from increasing load of a network system, without affecting quality-of-service monitoring accuracy, the embodiments of this application provide a communication method (for details, refer to the following) and a communications apparatus. FIG. 2 is a schematic diagram of a hardware structure of a communications apparatus according to an embodiment of this application. The communications apparatus may be a first node or a second node in the following. The communications apparatus 20 includes at least one processor 201, a communications bus 202, a memory 203, and at least one communications interface 204.

The processor 201 may be a general-purpose central processing unit (central processing unit, CPU for short), a microprocessor, an application-specific integrated circuit (application-specific integrated circuit, ASIC for short), or one or more integrated circuits configured to control program execution in the solutions in this application.

The communications bus 202 may include a path for transmitting information between the foregoing components.

The communications interface 204 is any type of apparatus such as a transceiver, and is configured to communicate with another device or a communications network, for example, an Ethernet, a radio access network (radio access network, RAN for short) device, or a wireless local area network (wireless local area networks, WLAN for short).

The memory 203 may be a read-only memory (read-only memory, ROM for short) or another type of static storage device that can store static information and an instruction, a random access memory (random access memory, RAM for short) or another type of dynamic storage device that can store information and an instruction, or may be an electrically erasable programmable read-only memory (electrically erasable programmable read-only memory, EEPROM for short), a compact disc read-only memory (compact disc read-only memory, CD-ROM for short) or another optical disc storage, an optical disc storage (including a compact disc, a laser disc, an optical disc, a digital versatile disc, a Blu-ray disc, or the like), a disk storage medium or another magnetic storage device, or any other medium that can be configured to carry or store expected program code in a form of an instruction or a data structure and that can be accessed by a computer. However, this is not limited thereto. The memory may exist independently, and is connected to the processor by using the communications bus 202. Alternatively, the memory may be integrated with the processor.

The memory 203 is configured to store a computer executable instruction for executing the solutions in this application, and the processor 201 controls the execution. The processor 201 is configured to execute the computer executable instruction stored in the memory 203, to implement the method provided in the following embodiments of this application.

Optionally, the computer executable instruction in this embodiment of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the communications apparatus 20 may include a plurality of processors, for example, the processor 201 and a processor 208 in FIG. 2. Each of these processors may be a single-core (single-CPU) processor, or may be a multi-core (multi-CPU) processor. The processors herein may refer to one or more devices, circuits, and/or processing cores configured to process data (for example, a computer program instruction).

During specific implementation, in an embodiment, the communications apparatus 20 may further include an output device 205 and an input device 206. The output device 205 communicates with the processor 201, and may display information in a plurality of manners. For example, the output device 205 may be a liquid crystal display (liquid crystal display, LCD for short), a light emitting diode (light emitting diode, LED for short) display device, a cathode ray tube (cathode ray tube, CRT for short) display device, or a projector (projector). The input device 206 communicates with the processor 201, and may receive an input of a user in a plurality of manners. For example, the input device 206 may be a mouse, a keyboard, a touchscreen device, or a sensing device.

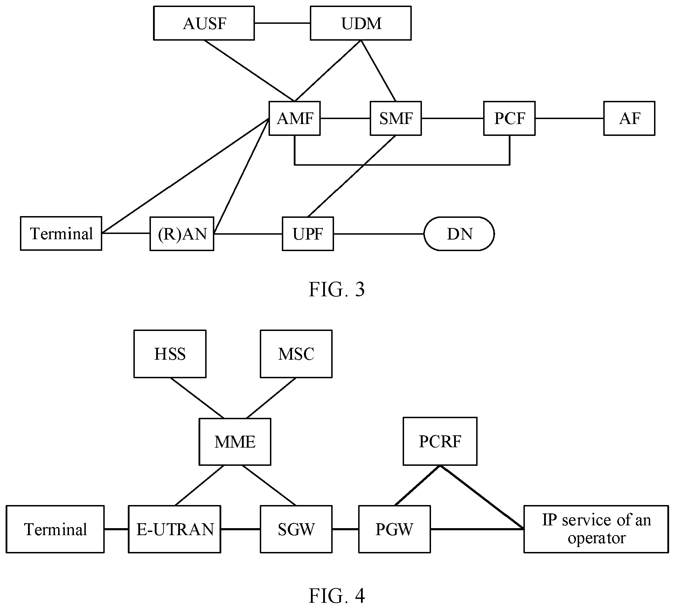

The method provided in the embodiments of this application may be applied to a 5G network. As shown in FIG. 3, a 5G network architecture may include the following plurality of network function (network functions, NF for short) devices: an authentication server function (authentication server function, AUSF for short) device, an access and mobility management function (access and mobility management function, AMF for short) device, a data network (data network, DN for short), and a unified data management (unified data management, UDM for short) device, a policy control function (policy control function, PCF for short) device, a (radio) access network ((radio) access network, (R)AN for short) device, a UPF device, a terminal, an application function (application function, AF for short) device, and a session management function (session management function, SMF for short) device. The device may also be referred to as a network element, an entity, or the like.

The UDM device, the AUSF device, the PCF device, the AMF device, and the SMF device in FIG. 3 may also be collectively referred to as a control plane function (control plane function, CPF for short) device. This is not specifically limited in this embodiment of this application.

Functions of the (R)AN device include radio resource management, uplink and downlink data classification, user-plane data forwarding, providing a wireless connection, and the like. Functions of the UPF device include data packet routing and forwarding. In addition, the UPF device may further be used as a mobility anchor or an uplink classifier to support routing of a service flow to a DN, or as a branch point (branch point, BP for short) to support a multihoming packet data unit (packet data unit, PDU for short) session. The UPF device may further perform data statistics collection, rate limiting, statistics reporting, and the like. The DN may be an operator service, an Internet access service, or a third-party service. Functions of the AMF device include user registration management, reachability detection, SMF node selection, mobile state transition management, and the like. Functions of the SMF device include performing a session management function, for example, establishing, modifying, or deleting a PDU session, establishing a QoS flow, and establishing a user plane resource. The PCF device serves as a policy decision point, and functions of the PCF device include providing rules such as a rule of detection based on a service data flow and an application, a gating control rule, a QoS rule, and a flow-based charging control rule. Functions of the AF device include providing a service by interacting with a 3GPP core network, to affect service flow routing, access network capability exposure, policy control, and the like. Main functions of the AUSF device include providing an authentication service. Main functions of the UDM device include storing user subscription data.

It should be noted that the access network device, the AMF device, the SMF device, the AUSF device, the UDM device, the UPF device, the PCF device, and the like in FIG. 3 are merely names, and the names constitute no limitation on the devices. In the 5G network and another future network, network elements or devices corresponding to the access network device, the AMF device, the SMF device, the AUSF device, the UDM device, the UPF device, and the PCF device may have other names. This is not specifically limited in this embodiment of this application. For example, the UDM device may alternatively be replaced with a home subscriber server (home subscriber server, HSS for short), a user subscription database (user subscription database, USD for short), a database device, or the like. This is uniformly described herein, and details are not described below again.

It may be understood that FIG. 3 is merely an example architectural diagram. In addition to the functional device shown in FIG. 3, the 5G network architecture may further include another functional device.

Specifically, the method provided in the embodiments of this application may be further applied to an evolved packet system (evolved packet system, EPS for short) network (namely, a network commonly referred to as a 4th generation (4th generation, 4G for short) network) shown in FIG. 4. As shown in FIG. 4, the EPS network may include the following plurality of functional network elements: a terminal, an evolved universal terrestrial radio access network (evolved universal terrestrial radio access network, E-UTRAN for short) (which may be specifically an eNodeB), a serving gateway (serving gateway, S-GW for short), a packet data network gateway (packet data network gateway, P-GW for short), a mobility management network element (mobility management entity, MME for short), an HSS, a mobile switching center (mobile switching center, MSC for short), and a policy and charging rules function (policy and charging rules function, PCRF for short) network element.

The S-GW and the P-GW may be collectively referred to as a gateway (gateway, GW for short). In 4.5G, as a user plane function and a control plane function are separated, the GW is further divided into a gateway user plane function (gateway user plane function, GW-U for short) and a gateway control plane function (gateway control plane function, GW-C for short).

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

Optionally, the terminal (terminal) in the embodiments of this application may also be referred to as user equipment (user equipment, UE for short), and may be specifically various handheld devices, in-vehicle devices, wearable devices, computing devices, or other processing devices connected to a wireless modem that have a wireless communication function; and may further include a subscriber unit (subscriber unit), a cellular phone (cellular phone), a smartphone (smartphone), a wireless data card, a personal digital assistant (personal digital assistant, PDA for short) computer, a tablet computer, a wireless modem (modem), a handheld (handheld) device, a laptop computer (laptop computer), a cordless phone (cordless phone) or a wireless local loop (wireless local loop, WLL for short) station, a machine type communication (machine type communication, MTC for short) terminal, a mobile station (mobile station, MS for short), a terminal device (terminal device), and the like. For ease of description, the devices mentioned above are collectively referred to as a terminal in this application.

Optionally, the access network device in the embodiments of this application is a device that accesses a core network, for example, may be a base station, a broadband network gateway (broadband network gateway, BNG for short), an aggregation switch, or a non-3GPP access network device. The base station may include base stations such as a macro base station, a micro base station (also referred to as a small cell), a relay station, an access point, and or the like in various forms. In systems using different radio access technologies, a device having a base station function may have different names. For example, in a 3rd-generation (3rd generation, 3G for short) system, the device is referred to as a NodeB (NodeB); in a 4th-generation system, the device is referred to as an eNodeB; and in a 5th-generation system, the device is referred to as a gNB (gNodeB).

For ease of understanding of the technical solutions in the embodiments of this application, the technologies related to this application are first briefly described. Details are as follows:
Service flow:
The service flow in the embodiments of this application includes a service aggregation flow and a service subflow. In a 4G or 4.5th-generation (4.5th generation, 4.5G for short) network, the service aggregation flow includes a bearer or a packet data network (packet data network, PDN for short) connection, and the service subflow includes a specific service flow in the bearer. In a 5G network, the service aggregation flow includes a QoS flow or a packet data unit (packet data unit, PDU for short) session, and the service subflow includes a specific service flow in the QoS flow.

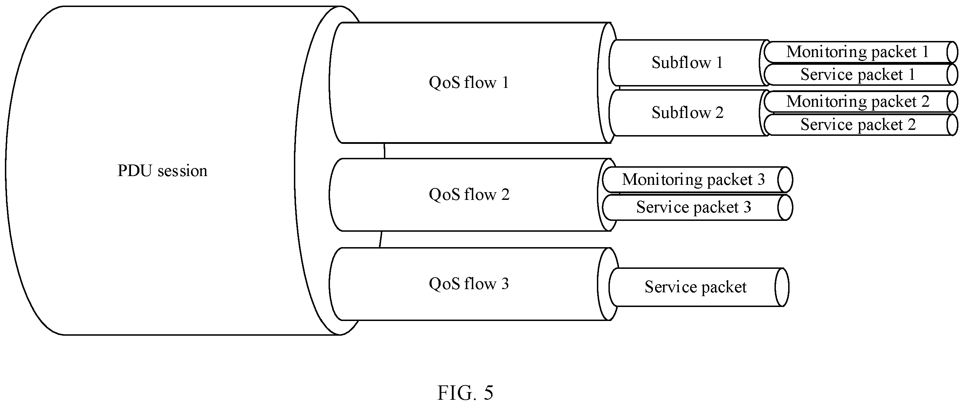

The 5G network is used as an example. As shown in FIG. 5, it is assumed that one PDU session includes three QoS flows: a QoS flow 1, a QoS flow 2, and a QoS flow 3. The QoS flow 1 includes a subflow 1 and a subflow 2, and the subflow 1 and the subflow 2 respectively correspond to different service flows. For example, the subflow 1 corresponds to a vehicle-to-everything communication (vehicle to everything communication, V2X for short) service flow 1, and the subflow 2 corresponds to a V2X service flow 2. In this case, a service aggregation flow in FIG. 5 includes the PDU session, the QoS flow 1, the QoS flow 2, and the QoS flow 3. Service subflows of the QoS flow 1 include the subflow 1 and the subflow 2. The service subflow or the service aggregation flow may be used to transmit a service packet and a monitoring packet. The service packet is specifically a user packet, that is, a packet transmitted by a terminal or an application server by using a mobile network when the terminal or the application server needs to execute a service. The monitoring packet is specifically a packet used to monitor quality of service in the mobile network. The monitoring packet is constructed by a packet sending device (which is a first node in the following). The packet sending device may be a terminal, an access network device, or a UPF device in the 5G network; or may be a terminal, an access network device, or a gateway user plane function (gateway user plane function, GW-U for short) entity in the 4.5G network; or may be a terminal, an access network device, a gateway (gateway, GW for short), or the like in the 4G network. This is not specifically limited in the embodiments of this application.

Monitoring type:
In the embodiments of this application, there are three monitoring types for quality-of-service monitoring: link connectivity monitoring, service transmission performance monitoring, and loopback (loopback, LB for short) monitoring. The three monitoring types are separately and briefly described as follows:
(1) Link connectivity monitoring
   In link connectivity monitoring, the packet sending device mainly periodically sends a monitoring packet, and a packet receiving device (which is a second node in the following) determines, based on an arrival status of the monitoring packet, whether a link is faulty. A sending period is determined mainly based on factors such as a delay. For example, a packet transmission delay requires end-to-end transmission of 6 ms and a sending period of 2 ms. If the packet receiving device does not receive any monitoring packet in three consecutive periods, it may be considered that the link is faulty. In other words, an arrival interval of monitoring packets does not meet a quality-of-service requirement of a service.

During link connectivity monitoring, parameters required by the packet sending device include a service flow identifier and a sending period. The service flow identifier indicates a service flow of the service, and the sending period is an interval between time points for consecutively sending two monitoring packets.

Optionally, in the embodiments of this application, in the 5G network, if the service flow is a PDU session, the service flow identifier may be a PDU session identifier (Identity, ID for short), address information of the terminal, or a tunnel endpoint identifier (tunnel endpoint identifier, TEID for short) of a general packet radio service (general packet radio service, GPRS for short) tunneling protocol (GPRS tunneling protocol, GTP for short) tunnel used to carry the PDU session. In other words, a PDU session of the terminal may be determined based on the PDU session identifier, the address information of the terminal, or the TEID of the GTP tunnel used to carry the PDU session. If the service flow is a QoS flow, the service flow identifier may be a PDU session identifier plus a QoS flow identifier (QoS Flow ID, QFI for short). In other words, a QoS flow in a PDU session of the terminal may be determined based on the PDU session identifier plus the QFI. If the service flow is a specific service flow in the QoS flow, the service flow identifier may be a 5-tuple or other address information that can uniquely determine a specific service flow in the QoS flow, for example, a source MAC address and a destination MAC address. In other words, a specific service flow in a QoS flow in a PDU session of the terminal may be determined based on the 5-tuple or other address information that can uniquely determine a specific service flow in the QoS flow. The 5-tuple includes a source internet protocol (internet protocol, IP for short) address, a destination IP address, a source port number, a destination port number, and a transport layer protocol number.

In the 4G or 4.5G network, if the service flow is a PDN connection, the service flow identifier may include a PDN connection identifier. In other words, a PDN connection of the terminal may be determined based on the PDN connection identifier. If the service flow is a bearer, the service flow identifier may be a PDN connection identifier plus a bearer identifier. In other words, a bearer in a PDN connection of the terminal may be determined based on the PDN connection identifier plus the bearer identifier. If the service flow is a specific service flow in the bearer, the service flow identifier may be the 5-tuple. In other words, a specific service flow may be uniquely determined based on the 5-tuple. This is uniformly described herein, and details are not described below again.

Optionally, the parameters required by the packet sending device may further include at least one of a context identifier of the monitoring packet and a monitoring type. The monitoring type indicates that a type of quality-of-service monitoring of the service is link connectivity monitoring. The context identifier of the monitoring packet indicates a local context of the monitoring packet. During link connectivity monitoring, the local context of the monitoring packet in the packet sending device may specifically include at least one of the sending period of the monitoring packet, the monitoring type, the context identifier of the monitoring packet, and the service flow identifier. This is uniformly described herein, and details are not described below again.

During link connectivity monitoring, parameters required by the packet receiving device include a service flow identifier, a receiving period, and a fault decision threshold. The service flow identifier indicates a service flow of the service, the receiving period is an interval between time points for consecutively receiving two monitoring packets, and the fault decision threshold is used for fault discrimination. For example, a packet transmission delay requires end-to-end transmission of 6 ms. If the receiving period is 2 ms, the fault decision threshold herein should be set to 3. If the packet receiving device does not receive any monitoring packet in three consecutive periods, it may be considered that the link is faulty. During quality-of-service monitoring of the service, the service flow identifiers in the parameters required by the packet receiving device and the packet sending device are the same, and the sending period and the receiving period are the same. This is uniformly described herein, and details are not described below again.

In addition, the parameters required by the packet receiving device may further include at least one of a context identifier of the monitoring packet, a monitoring type, and an action after a fault. The action after the fault may be, for example, initiating loopback monitoring for fault location, or reporting the fault to a control plane. This is not specifically limited in the embodiments of this application. The context identifier of the monitoring packet indicates a local context of the monitoring packet. During link connectivity monitoring, the local context of the monitoring packet in the packet receiving device may specifically include at least one of the receiving period of the monitoring packet, the fault decision threshold, the monitoring type, the context identifier of the monitoring packet, the service flow identifier, and an action corresponding to the fault. This is uniformly described herein, and details are not described below again.

Optionally, during link connectivity monitoring, an intermediate device may further be used between the packet sending device and the packet receiving device. For example, in the 5G network, if the packet sending device is a terminal, and the packet receiving device is a UPF device, the intermediate device may be, for example, an access network device. Parameters required by the intermediate device include at least one of a context identifier of the monitoring packet, a monitoring type, a processing manner, a fault decision threshold, and an action corresponding to a fault. The processing manner of the intermediate device includes transparent transmission or modifying a sending period for sending the monitoring packet to the packet receiving device to a receiving period for receiving the monitoring packet by the intermediate device from the packet sending device. Quality of service may also be monitored by using the intermediate device. This is not specifically limited in the embodiments of this application.

Certainly, during link connectivity monitoring, the parameters required by the packet receiving device, the parameters required by the intermediate device, and the parameters required by the packet sending device may further include other parameters. This is not specifically limited in the embodiments of this application.

### (2) Service transmission performance monitoring

Service transmission performance monitoring is mainly used to monitor service transmission performance of a service flow, such as a packet loss rate or a jitter status. A basic principle is to calculate the packet loss ratio or the jitter status by exchanging statistical information between the packet sending device and the packet receiving device.

During service transmission performance monitoring, parameters required by the packet sending device include a service flow identifier and a sending period. The sending period may be time-based. For example, one monitoring packet is sent every two seconds. Alternatively, the sending period may be based on a data volume. For example, each time the packet sending device sends 1M (megabyte) service packet, the packet sending device may send statistical data of the service packet once by using a monitoring packet.

Optionally, the parameters required by the packet sending device may further include at least one of a context identifier of the monitoring packet and a monitoring type. The monitoring type indicates that a type of quality-of-service monitoring of a service is service transmission performance monitoring. The context identifier of the monitoring packet indicates a local context of the monitoring packet. During service transmission performance monitoring, the local context of the monitoring packet in the packet sending device may specifically include at least one of the service flow identifier, the sending period of the monitoring packet, the context identifier of the monitoring packet, and the monitoring type. This is uniformly described herein, and details are not described below again.

During service transmission performance monitoring, parameters required by the packet receiving device include a service flow identifier and a transmission performance threshold. The transmission performance threshold is used to determine transmission performance, and the transmission performance threshold may be, for example, a packet loss rate threshold or a jitter threshold. For example, if the packet loss rate threshold is 0.5%, when the packet receiving device determines that a current packet loss rate is 0.5% or exceeds 0.5%, it may be considered that the service transmission performance does not meet a requirement. Alternatively, for example, if the jitter threshold is 2 ms, when the packet receiving device determines that a current jitter value is 2 ms or exceeds 2 ms, it may be considered that the service transmission performance does not meet a requirement.

In addition, the parameters required by the packet receiving device may further include at least one of a context identifier of the monitoring packet, a monitoring type, and an action corresponding to a fault. The action corresponding to the fault may be, for example, initiating loopback monitoring for fault location, or reporting the fault to a control plane. This is not specifically limited in the embodiments of this application. The context identifier of the monitoring packet indicates a local context of the monitoring packet. During service transmission performance monitoring, the local context of the monitoring packet in the packet receiving device may specifically include at least one of the service flow identifier, the transmission performance threshold, the context identifier of the monitoring packet, the monitoring type, and the action corresponding to the fault. This is uniformly described herein, and details are not described below again.

Certainly, during service transmission performance monitoring, the parameters required by the packet receiving device and the parameters required by the packet sending device may further include other parameters. This is not specifically limited in the embodiments of this application.

### (3) Loopback monitoring

Loopback monitoring is mainly used to monitor a loopback delay of a service flow and locate a fault. Abasic principle is to measure the loopback delay and locate the fault by sending a monitoring packet by a packet transceiver device (which is both a packet sending device and a packet receiving device). Loopback monitoring differs from link connectivity monitoring and service transmission performance monitoring mainly in existence of a loopback device in loopback monitoring, and a function of the loopback device is to return a monitoring packet along an original path. In this case, in the following embodiment, when a first node performs loopback monitoring on quality of service, the first node may be the packet transceiver device, and a second node may be the loopback device. In this case, after the second node receives a monitoring packet sent by the first node, the monitoring packet further needs to be returned to the first node along an original path.

During loopback monitoring, parameters required by the packet transceiver device include a service flow identifier, loopback path length information, and a context identifier of the monitoring packet. The loopback path length information is used for fault location. The context identifier of the monitoring packet indicates a local context of the monitoring packet. During loopback monitoring, the local context of the monitoring packet in the packet transceiver device may specifically include the service flow identifier, the loopback path length information, and the context identifier of the monitoring packet. This is uniformly described herein, and details are not described below again.

Parameters required by the loopback device include a service flow identifier.

Optionally, the parameters required by the loopback device may further include a context identifier of the monitoring packet. The context identifier of the monitoring packet indicates a local context of the monitoring packet. During loopback monitoring, the local context of the monitoring packet in the loopback device may specifically include at least one of the service flow identifier or the context identifier of the monitoring packet. This is uniformly described herein, and details are not described below again.

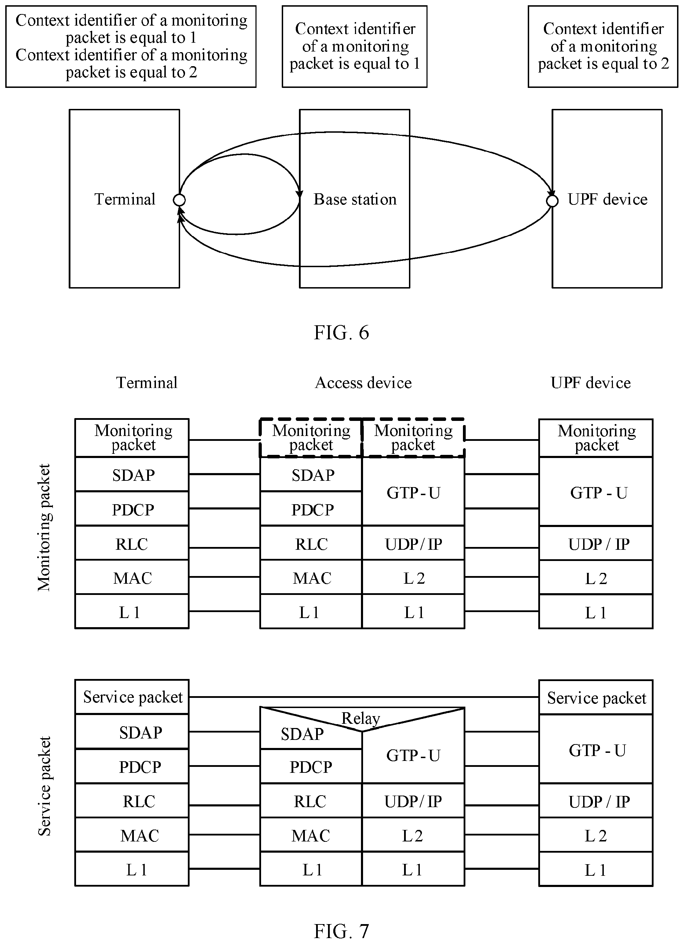

For example, FIG. 6 is a schematic diagram of loopback monitoring according to an embodiment of this application. A terminal initiates loopback monitoring, and a context identifier of a monitoring packet is 1. Because a base station includes a context corresponding to the context identifier of the monitoring packet, the base station may determine, based on the context of the monitoring packet, that the base station is a loopback device, and then the base station may loop the monitoring packet back to the terminal. After receiving the monitoring packet, the terminal may continue to initiate loopback monitoring, and a context identifier of a monitoring packet is 2. Because the base station does not include a context corresponding to the context identifier of the monitoring packet, the base station treats the monitoring packet as a common service packet, and transmits the monitoring packet to a UPF device. Because the UPF device includes the context corresponding to the context identifier of the monitoring packet, the UPF device may determine, based on the context of the monitoring packet, that the UPF device is a loopback device, and then the UPF device may loop the monitoring packet back to the terminal. Because the terminal learns of a segment loopback delay and an end-to-end delay, if a path is faulty, this may be detected through loopback monitoring.

Certainly, during loopback monitoring, the parameters required by the packet transceiver device and the parameters required by the loopback device may further include other parameters. This is not specifically limited in the embodiments of this application.

Table 1 shows comparison between the three monitoring types.

**Table 1**

| | | | |
|---|---|---|---|
| Monitoring type | Parameters required by the packet sending device or parameters required by the packet transceiver device | Parameters required by the intermediate device (optional) | Parameters required by the packet receiving device or parameters required by the loopback device |
| Link connectivity monitoring | Service flow identifier, sending period, context identifier of the monitoring packet (optional), and | Context identifier of the monitoring packet (optional), monitoring type (optional), processing manner, | Service flow identifier, receiving period, fault decision threshold, monitoring type (optional), context identifier of |
| | monitoring type (optional) | fault decision threshold (optional), and action corresponding to a fault (optional) | the monitoring packet (optional), and action corresponding to a fault (optional) |
| Service transmission performance monitoring | Service flow identifier, sending period, context identifier of the monitoring packet (optional), and monitoring type (optional) | - | Service flow identifier, transmission performance threshold, monitoring type (optional), context identifier of the monitoring packet (optional), and action corresponding to a fault (optional) |
| Loopback monitoring | Service flow identifier, loopback path length information, and context identifier of the monitoring packet | - | Service flow identifier and context identifier of the monitoring packet (optional) |

It should be noted that this application provides only several example monitoring types of quality-of-service monitoring of a service. Certainly, there may be another monitoring type. This is not specifically limited in the embodiments of this application.

It should be further noted that the foregoing merely describes, as an example, information included in the local context, and the local context is not limited to including only the foregoing information. For example, in the embodiments of this application, the local context may further include information such as first parameter information, a packet generation manner, and a quality of service decision threshold. For details, refer to descriptions of related parts in the following.

The following describes packet formats of the service packet and the monitoring packet.

Packet format:
In the embodiments of this application, the monitoring packet and the service packet use a same 3GPP network protocol header. A main difference lies in that a payload type of the monitoring packet is monitoring packet, and a payload type of the service packet is service packet. The 5G network is used as an example. The 3GPP network protocol header corresponds to a protocol stack in FIG. 7. It can be learned from FIG. 7 that 3GPP network protocol headers between a terminal and an access network device include a service data adaptation protocol (service data adaptation protocol, SDAP for short) header, a packet data convergence protocol (packet data convergence protocol, PDCP for short) header, and a header of each lower protocol layer. The header of each lower protocol layer includes a radio link control (radio link control, RLC for short) layer, a media access control (media access control, MAC for short) layer, and a layer 1 (level 1, L1 for short). 3GPP network protocol headers between an access network device and a UPF entity include a GPRS tunneling protocol-user plane (GPRS tunneling protocol for the user plane, GTP-U for short) header, and a header of each lower protocol layer. The header of each lower protocol layer includes a user datagram protocol (user datagram protocol, UDP for short) or an internet protocol (internet protocol, IP for short) layer, a layer 2 (level 2, L2 for short), and L1. Because a same network protocol header can ensure that a monitoring packet and a corresponding service packet use a same end-to-end pipe resource, quality of service of a service can be monitored by using the monitoring packet. In the embodiments of this application, the service packet corresponding to the monitoring packet is a service packet that corresponds to a same service flow as the monitoring packet. For example, in FIG. 5, a service packet corresponding to a monitoring packet 1 is a service packet 1, a service packet corresponding to a monitoring packet 2 is a service packet 2, a service packet corresponding to a monitoring packet 3 is a service packet 3, and so on.

Optionally, the monitoring packet in the embodiments of this application may be referred to as a link quality awareness protocol (link quality awareness protocol, LQAP for short) packet, or may be referred to as another packet. This is not specifically limited in the embodiments of this application.

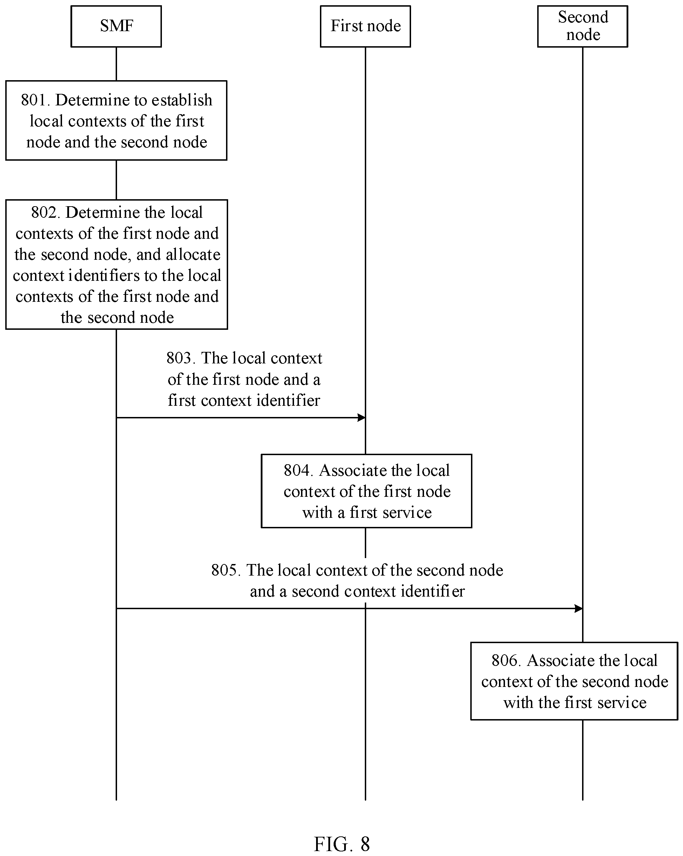

An embodiment of this application provides a quality-of-service monitoring method, used to monitor quality of service of a first service by using a first node and a second node. The first service is a service on which quality-of-service monitoring needs to be performed, and does not refer to a particular service. Before the quality of service of the first service is monitored, a local context of a monitoring packet in the first node and/or the second node may be configured. The following describes the configuration process by using an example in which the first node as a terminal, the second node is a UPF device, and the configuration process is performed in a 5G network. In a configuration process shown in FIG. 8, for ease of description, the local context of the monitoring packet in the first node is referred to as a local context of the first node for short, and the local context of the monitoring packet in the second node is referred to as a local context of the second node for short. A context identifier of the local context of the first node is referred to as a first context identifier, and a context identifier of the local context of the second node is referred to as a second context identifier.

As shown in FIG. 8, the configuration process of the local contexts of the first node and the second node includes the following steps.

801. An SMF determines to establish the local contexts of the first node and the second node.

The first node and the second node are a receive end and a transmit end of a service packet of the first service. When the monitoring packet is an LQAP packet, an LQAP connection between the first node and the second node may be determined by configuring the local contexts on the first node and the second node.

The SMF may determine, when triggered by any one or more of the following conditions, to establish the local contexts of the first node and the second node: (1) The SMF receives a monitoring indication that is for the first service and that is sent by another network device (for example, a PCF). (2) The SMF performs determining based on a local policy (or referred to as local configuration information). For example, when the service meets a preset condition in the local policy, the SMF determines to establish the local contexts of the first node and the second node. For example, the preset condition may be that a reliability requirement of the service is greater than a preset threshold. In this case, if the terminal determines, based on a QoS requirement of a QoS flow, that a reliability requirement of the QoS flow is greater than the preset threshold, the SMF determines to establish local contexts of a transmit end and a receive end of a service packet of a service corresponding to the QoS flow. For example, if the local policy includes information about performing quality-of-service monitoring on a PDU session of a terminal, when the terminal establishes a new PDU session, the SMF determines to establish local contexts of monitoring packets of a transmit end and a receive end of a service packet of a service corresponding to the established PDU session.

802. The SMF determines the local contexts of the first node and the second node, and allocates context identifiers to the local contexts of the first node and the second node.

The local context may include one or more pieces of information of: a service flow identifier of the first service, a sending rule and/or a receiving rule of the monitoring packet, and a generation manner of the monitoring packet. Certainly, the local context may further include other information. This is not specifically limited in this embodiment of this application.

The local contexts of the first node and the second node may be as follows:
First node: Service flow identifier + Uplink sending rule + Downlink receiving rule.
Second node: Service flow identifier + Downlink sending rule + Uplink receiving rule.

The uplink sending rule may include one or more pieces of information of an uplink sending period and a generation manner of a monitoring packet. The downlink sending rule may include one or more pieces of information of a downlink sending period and a generation manner of a monitoring packet. The downlink receiving rule may include a downlink receiving period. The uplink receiving rule may include an uplink receiving period. For the generation manner of the monitoring packet, refer to related descriptions in the following.

The uplink sending period is a period for sending an uplink monitoring packet. The downlink receiving period is a period for receiving a downlink monitoring packet. The downlink sending period is a period for sending the downlink monitoring packet. The uplink receiving period is a period for receiving the uplink monitoring packet. The uplink sending period and the downlink sending period may be the same or may be different. The downlink receiving period and the uplink receiving period may be the same or may be different. This is not specifically limited in this embodiment of this application.

If the SMF determines, when triggered by the condition (1), to establish the local contexts of the first node and the second node, in a possible implementation, the PCF sends a monitoring indication for the first service to the SMF. The monitoring indication includes one or more pieces of information of: a service flow identifier of the first service, an uplink sending period and/or an uplink receiving period of the monitoring packet, a downlink sending period and/or a downlink receiving period of the monitoring packet, and a generation manner of the monitoring packet. The SMF receives the monitoring indication for the first service that is sent by the PCF, determines, based on the service flow identifier in the monitoring indication, the service on which quality-of-service monitoring needs to be performed, and determines to establish local contexts of a transmit end and a receive end of a service packet of the service.

The sending period (which may be an uplink sending period or a downlink sending period) of the monitoring packet may be explicitly indicated or implicitly indicated. For example, during explicit indication, the monitoring indication may indicate that the sending period of the monitoring packet is 2 seconds. For example, during implicit indication, the monitoring indication may indicate a fault awareness time (that is, a time period that elapses before the network can be aware of a fault event after a link fault occurs) expected by the first service. The SMF determines the sending period of the monitoring packet based on the received fault awareness time. The sending period of the monitoring packet is less than or equal to the fault awareness time. For example, the SMF may multiply the fault awareness time by a value greater than 0 and less than or equal to 1, to obtain the sending period of the monitoring packet. A manner of indicating the receiving period (which may be an uplink receiving period or a downlink receiving period) of the monitoring packet is similar, and details are not described herein again.

The generation manner of the monitoring packet: (a). The first node generates the monitoring packet. (b). The first node encapsulates the service packet to obtain the monitoring packet. The PCF may determine the generation manner of the monitoring packet based on a current running status of the network. For example, when network load is relatively light, the PCF determines that the generation manner of the monitoring packet may be (a). When network load is relatively heavy, the PCF determines that the generation manner of the monitoring packet may be (b).

If the SMF determines, when triggered by the condition (2), to establish the local contexts of the first node and the second node, the SMF may determine one or more pieces of information of: a service flow identifier of the first service, an uplink sending period and/or an uplink receiving period of the monitoring packet, a downlink sending period and/or a downlink receiving period of the monitoring packet, and a generation manner of the monitoring packet based on a local policy. Alternatively, the SMF may negotiate with the first node and/or the second node to determine one or more pieces of information of: an uplink sending period and/or an uplink receiving period of the monitoring packet, a downlink sending period and/or a downlink receiving period of the monitoring packet, and a generation manner of the monitoring packet.

803. The SMF sends the local context of the first node and the first context identifier to the first node. Correspondingly, the first node receives the local context of the first node and the first context identifier from the SMF. The first context identifier is used by the first node to obtain the local context of the first node based on the identifier.

The local context of the first node and/or the first context identifier may be included in a non-access stratum (non-access stratum, NAS for short) message and sent to the first node by using the base station.

804. The first node associates the local context of the first node with the first service.

The first node determines a service flow of the first service based on the service flow identifier in the local context of the first node. The first node stores the local context of the first node into a local context of the service flow of the first service.

Alternatively, the first node determines a service flow of the first service based on the service flow identifier in the local context of the first node. The local context includes the service flow identifier of the first service.

805. The SMF sends the local context of the second node and the second context identifier to the second node. Correspondingly, the second node receives the local context of the second node and the second context identifier from the SMF. The second context identifier is used by the second node to obtain the local context of the second node based on the identifier.

The local context of the second node and/or the second context identifier may be included in an N4 session message.

806. The second node associates the local context of the second node with the first service.

For specific implementation of step 806, refer to step 804. Details are not described herein again.

When the base station needs to process the monitoring packet transmitted between the first node and the second node, the SMF may further send a local context of the base station and a context identifier of the local context of the base station to the base station, so that the base station associates the local context of the base station with the first service. An association method is similar to the method described in step 804. The local context of the base station and the context identifier of the local context of the base station may be included in an N2 message.

For example, the local context of the base station may include a service flow identifier, an uplink receiving rule, a downlink receiving rule, and a packet processing rule. The packet processing rule is the processing manner shown in Table 1. It should be noted that, if the base station transparently transmits the monitoring packet between the UPF device and the terminal, the SMF may not determine the local context of the base station or the context identifier of the local context of the base station.

In the method shown in FIG. 8, after receiving the local context of the first node (or the second node or the base station) and the identifier of the local context, the first node (or the second node or the base station) may return an acknowledgement message to the SMF. The acknowledgement message is used to notify the SMF that the first node (or the second node or the base station) has received the local context of the first node (or the second node or the base station) and the identifier of the local context.

It should be noted that, in the 5G network, for a PDU session or a QoS flow, the SMF may configure one local context for the first node and the second node (in this case, one PDU session or one QoS flow corresponds to one local context). Alternatively, the SMF may configure a plurality of local contexts for the first node and the second node (in this case, each specific service flow in one PDU session or one QoS flow may correspond to one local context). For a specific service flow in the QoS flow, the SMF usually configures only one local context for the first node and the second node. In the EPS network, for a bearer or a PDN connection, the SMF may configure one local context for the first node and the second node (in this case, one bearer or one PDN connection corresponds to one local context). Alternatively, the SMF may configure a plurality of local contexts for the first node and the second node (in this case, each specific service flow in one bearer or one PDN connection may correspond to one local context). For a specific service flow in a bearer or a PDN connection, the SMF usually configures only one local context for the first node and the second node.

The following specifically describes, with reference to FIG. 1 to FIG. 8, the quality-of-service monitoring method provided in the embodiments of this application.

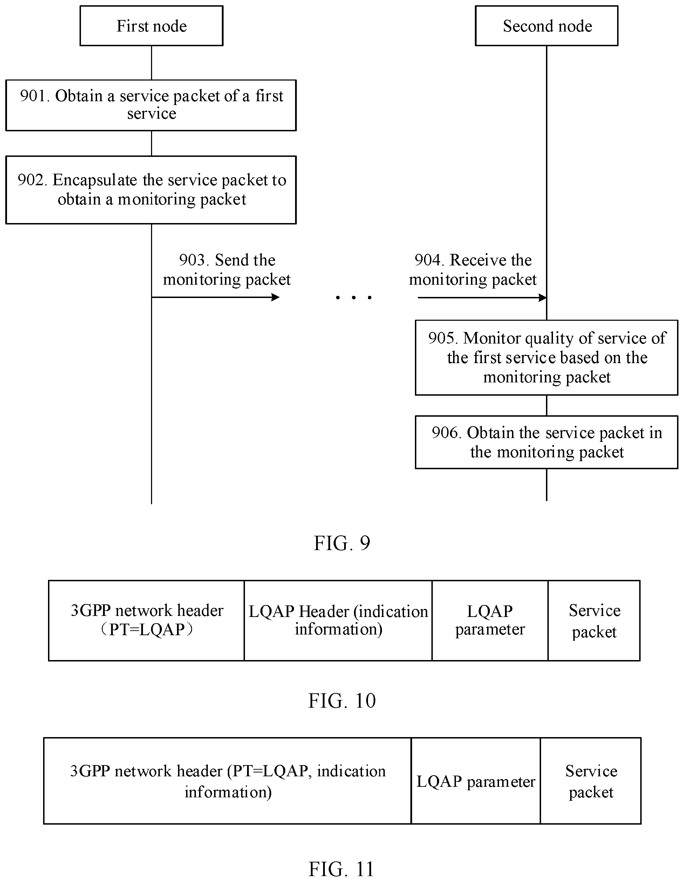

An embodiment of this application provides a quality-of-service monitoring method. As shown in FIG. 9, the method includes the following steps.

901. A first node obtains a service packet of a first service.

The first node may be a user plane device, and may be specifically an access network device (for example, a relay or a base station), a user plane gateway (for example, a UPF or a GW), or a terminal. It may be understood that when the method shown in FIG. 9 is applied to a 5G network, the first node may be a user plane device in the 5G network. When the method shown in FIG. 9 is applied to an EPS network, the first node may be a user plane device in the EPS network. The following provides a description by using an example in which the method shown in FIG. 9 is applied to a 5G network.

The first service is a service on which quality-of-service monitoring needs to be performed, and does not refer to a particular service.

The service on which quality-of-service monitoring needs to be performed may be preset in the first node. In this case, the first node may determine the first service based on the preset service on which quality-of-service monitoring needs to be performed. The service on which quality-of-service monitoring needs to be performed may alternatively be determined by the first node according to a preset rule. In this case, the first node may determine the first service according to the preset rule. For example, the preset rule may be that a reliability requirement of a service is greater than a preset threshold, where the preset threshold may be preset. When a service flow of a service is a QoS flow, the first node may determine a reliability requirement of the service based on a QoS requirement of the QoS flow. The reliability requirement of the service includes requirements such as a delay, a jitter, and a packet loss rate of the service. The service on which quality-of-service monitoring needs to be performed may alternatively be indicated by another node (for example, a PCF or an SMF) to the first node. In this case, the first node may determine the first service based on the indication. A manner in which the first node determines the first service is not specifically limited in this embodiment of this application.

The service packet of the first service is transmitted on a path between the first node and a second node. The first node may determine, by using a service identifier carried in an obtained packet, whether the packet is the service packet of the first service.

902. The first node encapsulates the service packet to obtain a monitoring packet, where the monitoring packet is usable for monitoring quality of service of the first service.

Specifically, when encapsulating the service packet, the first node may encapsulate some or all information related to quality-of-service monitoring of the first service, or may encapsulate some other information.

A format of the monitoring packet is further described with reference to FIG. 10 to FIG. 14 below.

903. The first node sends the monitoring packet to the second node.

In the first node and the second node, one node is a terminal, and the other node may be an access network device or a user plane gateway. Alternatively, in the first node and the second node, one node is a user plane gateway, and the other node may be an access network device. For example, in the first node and the second node, one node is a terminal, and the other node may be a UPF device or a base station. Alternatively, in the first node and the second node, one node is a UPF device, and the other node may be a base station.

For example, the first node may send the monitoring packet according to a packet sending rule in a local context. The packet sending rule is used to describe one or more rules that need to be met when the monitoring packet is sent, and the packet sending rule may include information such as a packet sending period and a packet generation manner.

904. The second node receives the monitoring packet from the first node, where the monitoring packet includes the service packet of the first service.

905. The second node monitors the quality of service of the first service based on the monitoring packet.

Specifically, the second node may monitor the quality of service of the first service based on the information that is included in the monitoring packet and that is related to quality-of-service monitoring of the first service. For example, the second node may perform at least one of link connectivity monitoring, service transmission performance monitoring, and loopback monitoring on the first service. For link connectivity monitoring, service transmission performance monitoring, and loopback monitoring, refer to the foregoing descriptions. Details are not described herein again. The quality of service of the service includes a delay, a jitter, and a packet loss rate of the service.

For example, the second node may receive the monitoring packet according to a packet receiving rule in a local context. The packet receiving rule is used to describe one or more rules that need to be met when the monitoring packet is received. The packet receiving rule may include information such as a packet receiving period.

It should be noted that in this embodiment of this application, an example in which the first node sends the monitoring packet and the second node receives the monitoring packet is used to describe the method provided in this embodiment of this application. Actually, the first node may alternatively receive the monitoring packet sent by the second node. In this case, the local context of the first node may further include a packet receiving rule, and the local context of the second node may further include a packet sending rule.

906. The second node obtains the service packet in the monitoring packet.

After step 906, if the second node is a terminal, after obtaining the service packet in the monitoring packet, a corresponding module that is in the terminal and that is configured to perform an action of obtaining the service packet in the monitoring packet may send the service packet to an application server corresponding to the first service in the terminal. If the second node is a UPF device, the UPF device sends the service packet to an application server corresponding to a first service in a DN. If the second node is a base station, when the service packet is a downlink service packet, the base station may send the service packet to a terminal; or when the service packet is an uplink service packet, the base station may send the service packet to a UPF device.

Optionally, if an intermediate node between the first node and the second node can process the monitoring packet, for example, when the first node is a terminal and the second node is a UPF device, the intermediate node may be a base station, and after receiving the monitoring packet sent by the first node, the intermediate node may alternatively determine quality of service of a first service between the first node and the intermediate node based on a local context on the intermediate node, insert information about the quality of service into the monitoring packet, and send the monitoring packet to the second node, so that the second node obtains more detailed information about the quality of service of the first service.

According to the method provided in this embodiment of this application, the first node may encapsulate the service packet to obtain the monitoring packet, to monitor the quality of service of the service. Because the monitoring packet is obtained by encapsulating the service packet, the first node can monitor the quality of service by using the service packet, avoiding an increase in load of a network system.

Optionally, during specific implementation of step 902, the encapsulating, by the first node, the service packet includes: adding, by the first node, at least one of the following information: first indication information and first parameter information, to the service packet, where the first indication information indicates that the monitoring packet is obtained by encapsulating the service packet, and the first parameter information is usable for monitoring the quality of service of the first service. For example, when the monitoring packet is an LQAP packet, the first parameter information may be information in an LQAP parameter. In this case, the local context of the first node may further include the first parameter information, so that the first node adds the first parameter information to the sent monitoring packet.

For example, the LQAP parameter may include one or more of a service flow identifier, a sending period of the LQAP packet, a context identifier of the LQAP packet, a monitoring type, a receiving period of the LQAP packet, a fault decision threshold required for quality-of-service monitoring, and an action corresponding to a fault.

Specifically, a location of the first indication information in the monitoring packet may be either of the following two cases:
Case 1: The monitoring packet includes at least one of the following information: a protocol header in a same format as the service packet and a first field including first indication information, where the first indication information indicates that the monitoring packet is obtained by encapsulating the service packet. The first field may be a preset field that carries the first indication information. For example, the first field may be an LQAP header field. This is to be further described with reference to FIG. 10 below.
Case 2: The monitoring packet includes a protocol header in a same format as the service packet, where the protocol header includes first indication information, and the first indication information indicates that the monitoring packet is obtained by encapsulating the service packet. This is to be further described with reference to FIG. 11 below.

In case 2, if the first node is a UPF device, the first indication information is included in a protocol header of a GTP layer of the monitoring packet. If the first node is a terminal, the first indication information is included in a protocol header of an SDAP layer or a PDCP layer of the monitoring packet. If the first node is a base station, and the second node is a terminal, the first indication information is included in a protocol header of an SDAP layer or a PDCP layer of the monitoring packet. If the first node is a base station, and the second node is a UPF device, the first indication information is included in a protocol header of a GTP layer of the monitoring packet.

Optionally, the monitoring packet includes the first indication information, and the method may further include: determining, by the second node based on the first indication information, that the monitoring packet is obtained by encapsulating the service packet. This step may be performed before step 906. In this case, when the monitoring packet includes the first indication information, the second node determines that the monitoring packet is obtained by encapsulating the service packet. When the monitoring packet does not include the first indication information or the monitoring packet includes second indication information described below, the second node determines that the monitoring packet is generated by the first node.

Optionally, the first node may perform step 902 when determining that the service packet of the first service is obtained within a preset time. The preset time may be a time point at which the first node obtains the service packet of the first service. If the first node determines that the service packet of the first service is not obtained within the preset time, the first node generates a monitoring packet, and sends the monitoring packet to the second node. The second node receives the monitoring packet from the first node, and monitors the quality of service of the first service based on the monitoring packet. The monitoring packet is also used to monitor the quality of service of the first service. It should be noted that, regardless of whether the monitoring packet sent by the first node is obtained by encapsulating the service packet or generated by the first node, the second node receives the monitoring packet. The second node determines, based on the first indication information or the second indication information (for specific content, refer to the following) in the monitoring packet, whether the monitoring packet is obtained by encapsulating the service packet or is generated by the first node. However, in this application, for better understanding of this application, the two types of monitoring packets are distinguished in description. A monitoring packet obtained by encapsulating the service packet is referred to as a first monitoring packet below, and a packet generated by the first node is referred to as a second monitoring packet below. Descriptions in a part below in which monitoring packets are not distinguished are applicable to both the first monitoring packet and the second monitoring packet. The second monitoring packet includes the second indication information, and the second indication information indicates that the second monitoring packet is generated by the first node. In this case, the second node determines, based on the second indication information, that the second monitoring packet is generated by the first node.

Specifically, a location of the second indication information in the second monitoring packet may be either of the following two cases:
Case (1): The second monitoring packet includes a protocol header in a same format as the service packet and/or a second field including the second indication information, where the second indication information indicates that the second monitoring packet is generated by the first node. The second field may be a preset field that carries the second indication information.
Case (2): The second monitoring packet includes a protocol header in a same format as the service packet, where the protocol header includes the second indication information, and the second indication information indicates that the second monitoring packet is generated by the first node.

The first field and the second field may be a same field, or may be different fields. This is not specifically limited in this embodiment of this application. It should be noted that the first indication information and the second indication information may be indicated by using different values of one or more bits in one field in the monitoring packet. For example, the second indication information and the first indication information may be indicated by using a bit in the monitoring packet. When a value of the bit is 1, it indicates that the monitoring packet is obtained by encapsulating the service packet, and when the value of the bit is 0, it indicates that the monitoring packet is generated by the first node. Alternatively, when a value of the bit is 0, it indicates that the monitoring packet is obtained by encapsulating the service packet; and when the value of the bit is 1, it indicates that the monitoring packet is generated by the first node. Certainly, the second indication information and the first indication information may alternatively be indicated by using a plurality of bits in the monitoring packet. This is not specifically limited in this embodiment of this application.

Specifically, if the first node is a UPF device, the second indication information may be included in a protocol header of a GTP layer of the second monitoring packet. If the first node is a terminal, the second indication information may be included in a protocol header of an SDAP layer or a PDCP layer of the second monitoring packet. If the first node is a base station, and the second node is a terminal, the second indication information may be included in a protocol header of an SDAP layer or a PDCP layer of the second monitoring packet. If the first node is a base station, and the second node is a UPF device, the second indication information may be included in a protocol header of a GTP layer of the second monitoring packet.

Optionally, the monitoring packet includes the first parameter information, and the first parameter information is usable for monitoring the quality of service of the first service. For example, the first parameter information may include a timestamp, statistical information of the service packet that is of the first service and that is received by the first node, and the like.

Optionally, the monitoring packet includes the first parameter information, and during specific implementation, step 905 may include: monitoring, by the second node, the quality of service of the first service based on the first parameter information included in the monitoring packet and a local context of the monitoring packet.

The local context of the monitoring packet may further include a quality of service decision threshold of the first service. The quality of service decision threshold of the first service is a reference for performing quality of service decision on the first service. For example, the quality of service decision threshold may include a delay threshold, a jitter threshold, a packet loss rate threshold, and the like. The delay threshold is used to determine whether a delay of the first service meets a requirement. The jitter threshold is used to determine whether a jitter of the first service meets a requirement. The packet loss rate threshold is used to determine whether a packet loss rate of the first service meets a requirement. The delay threshold and the packet receiving period may be a same value, or may be different values. When the delay threshold and the packet receiving period are a same value, the delay threshold may not be separately set, but is represented by using the packet receiving period.

For example, when the delay threshold is represented by using the packet receiving period, the second node may determine a delay of the monitoring packet based on the timestamp in the first parameter information and an actual receiving time of the monitoring packet, and determine, by comparing the delay with the packet receiving period in the local context of the monitoring packet, whether the delay of the first service meets the requirement. For example, it is assumed that the second node determines, based on the timestamp in the first parameter information and the actual receiving time of the monitoring packet, that the delay of the monitoring packet is 2 ms. If the packet receiving period in the local context of the monitoring packet is 1 ms, the delay of the first service does not meet the requirement. If the packet receiving period in the local context of the monitoring packet is 3 ms, the delay of the first service meets the requirement. It should be noted that during actual implementation, the second node may determine an average delay of the first service based on delays of a plurality of monitoring packets, and then compare the average delay of the first service with the packet receiving period in the local context, or determine, by using another method, whether the delay of the first service meets the requirement.

When the second node consecutively obtains delays of a plurality of monitoring packets, the second node may determine a jitter of the first service based on the delays of the plurality of monitoring packets, and determine, based on the jitter and a jitter threshold in a local context of the monitoring packet, whether the jitter of the first service meets the requirement. For example, if delays that are of five monitoring packets and that are consecutively obtained by the second node are respectively 3 ms, 4 ms, 5 ms, 3 ms, and 5 ms, the jitter of the first service is 5 ms - 3 ms = 2 ms. In this case, if the jitter threshold in the local context of the monitoring packet is 3 ms, the jitter of the first service meets the requirement; or if the jitter threshold in the local context of the monitoring packet is 1 ms, the jitter of the first service does not meet the requirement.

For another example, the second node may determine the packet loss rate of the first service based on a quantity of service packets of the first service that are received by the first node and a quantity of service packets of the first service that are sent by the second node in the first parameter information, and determine, by comparing the packet loss rate with the packet loss rate threshold in the local context of the monitoring packet, whether the packet loss rate of the first service meets the requirement. For example, it is assumed that the second node determines, based on the quantity of service packets of the first service that are received by the first node and the quantity of service packets of the first service that are sent by the second node in the first parameter information, that the packet loss rate of the first service is 1%. In this case, if the packet loss rate threshold in the local context of the monitoring packet is 0.9%, the packet loss rate of the first service does not meet the requirement; or if the packet loss rate threshold in the local context of the monitoring packet is 1.1%, the packet loss rate of the first service meets the requirement.

Before step 905 is performed, the second node may obtain the local context of the monitoring packet. Optionally, the monitoring packet includes a first identifier, and there is a correspondence between the first identifier and the local context of the monitoring packet. The method may further include: determining, by the second node, the local context of the monitoring packet based on the first identifier included in the monitoring packet and the correspondence.

The local context of the monitoring packet may be stored in the second node, and the first identifier is the context identifier mentioned above. For example, the second node may receive the correspondence between the first identifier and the local context of the monitoring packet from a control plane device. For details, refer to related descriptions in FIG. 8.

An example in which the monitoring packet is an LQAP packet is used below to describe locations of the first indication information and the first parameter information in the first monitoring packet and locations of the second indication information and the first parameter information in the second monitoring packet. For example, for a packet format of the monitoring packet, refer to FIG. 10 or FIG. 11. Indication information shown in FIG. 10 and FIG. 11 may be the first indication information or the second indication information based on different cases provided in the foregoing embodiments.

Referring to FIG. 10, if the monitoring packet is obtained by encapsulating the service packet, an LQAP header (Header) includes the first indication information. Alternatively, if the monitoring packet is generated by the first node, an LQAP header includes the second indication information. When the LQAP header includes the first indication information, the first indication information further indicates that the monitoring packet includes the service packet. Therefore, the first indication information may also be described as indication information used to indicate that there is a service packet in the monitoring packet. The second indication information may also be described as indication information used to indicate that there is no service packet in the monitoring packet. PT (payload type, payload type) = LQAP in a 3GPP network header indicates that the packet is an LQAP packet, and the monitoring packet may further include an LQAP parameter (including the first parameter information), and a payload (payload, that is, the service packet).

Referring to FIG. 11, in a 3GPP network header of the monitoring packet, in addition to PT = LQAP indicating that the packet is an LQAP packet, if the monitoring packet is obtained by encapsulating the service packet, the 3GPP network header further includes the first indication information; or if the monitoring packet is generated by the first node, the 3GPP network header further includes the second indication information; or a new PT may be defined to indicate whether the monitoring packet is obtained by encapsulating the service packet or generated by the first node.

For the two types of monitoring packets shown in FIG. 10 and FIG. 11, the second node may obtain the first indication information or the second indication information from the LQAP header or the 3GPP network header.

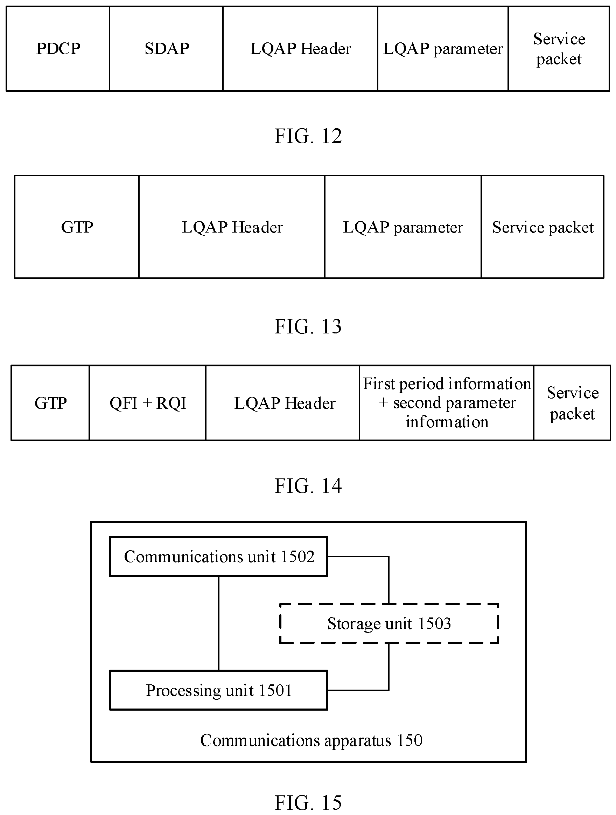

Specifically, referring to FIG. 12, when the first node is a terminal, the terminal may encapsulate the indication information (the first indication information or the second indication information) and the first parameter information between the payload and the SDAP layer (or the PDCP layer) of the monitoring packet. For example, the indication information may be included in the LQAP header, or may be included in the SDAP layer (or the PDCP layer), or may be indicated by using the new PT included in the 3GPP network header.

Optionally, the LQAP header may further include a context identifier, used by the second node to determine the local context of the monitoring packet. Optionally, the LQAP header may further include information such as an LQAP length (used to describe the LQAP parameter and/or the length of the LQAP header), so that the second node removes the LQAP parameter and/or the LQAP header from the monitoring packet, to obtain the service packet in the monitoring packet.

Specifically, referring to FIG. 13, when the first node is a UPF device, the UPF device may encapsulate the indication information (the first indication information or the second indication information) and the first parameter information between the payload and the GTP layer of the monitoring packet. The indication information may be included in the LQAP header, or may be included in the GTP layer, or may be indicated by using the new PT included in the 3GPP network header.

Optionally, the LQAP header may further include information such as an LQAP length (used to describe the LQAP parameter and/or the length of the LQAP header), so that the second node removes the LQAP parameter and/or the LQAP header from the monitoring packet, to obtain the service packet in the monitoring packet.

Optionally, a period for sending the monitoring packet by the first node is T. The first node may periodically sample the service packet of the first service. If the service packet of the first service is sampled at a sampling point, the first node sends the first monitoring packet to the second node; otherwise, the first node sends the second monitoring packet to the second node. In this case, the preset time may be one of a plurality of sampling points. T herein is the packet sending period mentioned above of the first node. When the first node does not obtain the service packet of the first service at the sampling point, the first node may generate a monitoring packet, to monitor the quality of service of the first service, thereby ensuring continuity of quality-of-service monitoring of the first service.

Optionally, the first node may learn of T from the control plane device. For example, the control plane device may be an SMF or an AMF, and the AMF may send T to the first node by using the SMF.

Optionally, the method further includes: learning of, by the first node from the control plane device, a generation manner of the monitoring packet, where the generation manner is generating the monitoring packet by using the service packet. In this case, once the first node samples the service packet of the first service at the sampling point, the first node encapsulates the service packet to obtain the monitoring packet; otherwise, the first node generates the monitoring packet.

In addition, in the method shown in FIG. 8, the first node and the second node obtain the local contexts of the monitoring packets by using a control plane device. Different from the method shown in FIG. 8, in this embodiment of this application, the terminal may further determine the local context of the monitoring packet by using the user plane. This manner may be applied to a mapping QoS mechanism (reflective QoS attribute, RQA for short) scenario.

When the first node is a terminal, the second node is a UPF device, and the monitoring packet is an uplink monitoring packet, the first node may further obtain T by using the following processes (11) to (13):
(11) The second node sends first period information to the first node, where the first period information indicates a period for sending a downlink monitoring packet by the second node.
(12) The first node receives the first period information from the second node.
(13) The first node determines T based on the first period information.

During specific implementation of step (13), the first node may determine the first period information as T.

Before sending the monitoring packet, the first node may further obtain the first parameter information, to add the first parameter information to the monitoring packet. Specifically, when the first node is a terminal, the second node is a UPF device, and the first parameter information is parameter information carried in an uplink monitoring packet, the first node may further obtain the first parameter information by using the following processes (21) to (23):
(21) The second node sends second parameter information to the first node, where the second parameter information is parameter information carried in the downlink monitoring packet sent by the second node. Both the first parameter information and the second parameter information are used to monitor the quality of service of the first service.
(22) The first node receives the second parameter information from the second node.
(23) The first node determines the first parameter information based on the second parameter information.

During specific implementation of step (23), the first node may determine the second parameter information as the first parameter information.

At least one of the first period information and the second parameter information may be included in a downlink LQAP packet. For example, for the downlink LQAP packet, refer to FIG. 14. A mapping QoS indication (reflective QoS indication, RQI for short) indicates that the LQAP packet is a packet in an RQA scenario, and a QFI indicates a QoS flow that is being monitored. After receiving the at least one of the first period information and the second parameter information, the terminal determines the local context of the monitoring packet of the terminal with reference to the received information.

In addition, after receiving the first period information, the terminal may further determine, based on the first period information, a period for receiving the downlink monitoring packet.

Optionally, the UPF device may further add the context identifier to an LQAP header and send the LQAP header to the terminal. The terminal may establish a correspondence between the context identifier and the local context of the monitoring packet. When the downlink LQAP packet does not include the context identifier, the context identifier may be a service flow identifier.

After creating the local context of the monitoring packet, the terminal receives the packet based on the packet receiving period in the local context of the monitoring packet, and sends the packet based on the packet sending period in the local context of the monitoring packet.

In the foregoing method, when the terminal determines the local context of the monitoring packet of the terminal based on the first period information and the second parameter information that are sent by the UPF device, according to the method provided in this embodiment of this application, the local context of the monitoring packet may be created on the terminal by using a user plane packet instead of using control plane signaling, so that a quantity of pieces of signaling can be reduced. The foregoing mainly describes the solutions provided in the embodiments of this application from a perspective of the method. It may be understood that, to implement the foregoing functions, the quality-of-service monitoring apparatus includes corresponding hardware structures and/or software modules for performing the functions. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the quality-of-service monitoring apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that, in this embodiment of this application, division into modules is an example, and is merely a logical function division. In actual implementation, another division manner may be used.

For example, when an integrated function module is used, FIG. 15 is a possible schematic structural diagram of a quality-of-service monitoring apparatus 150 in the foregoing embodiment. The quality-of-service monitoring apparatus 150 may be the first node or the second node. There may be a processing unit 1501, a communications unit 1502, and a storage unit 1503 in FIG. 15.

When the communications apparatus is the first node, the processing unit 1501 is configured to control and manage an action of the first node. For example, the processing unit 1501 is configured to support the first node in performing steps 803 and 804 in FIG. 8 and steps 901 to 903 in FIG. 9, and/or an action performed by the first node in another process described in the embodiments of this application. The communications unit 1502 is configured to support the first node in communicating with another network device, for example, communicating with the second node in FIG. 9. The storage unit 1503 is configured to store program code and data of the first node.

When the communications apparatus is the second node, the processing unit 1501 is configured to control and manage an action of the second node. For example, the processing unit 1501 is configured to support the second node in performing steps 805 and 806 in FIG. 8 and steps 904 to 906 in FIG. 9, and/or an action performed by the second node in another process described in the embodiments of this application. The communications unit 1502 is configured to support the second node in communicating with another network device, for example, communicating with the first node in FIG. 9. The storage unit 1503 is configured to store program code and data of the second node.

The processing unit 1501 may be a processor or a controller, and the communications unit 1502 may be a communications interface, a transceiver, a transceiver circuit, or the like. The communications interface is a general term, and may include one or more interfaces. The storage unit 1503 may be a memory. When the processing unit 1501 is a processor, the communications unit 1502 is a communications interface, and the storage unit 1503 is a memory, the communications apparatus in this embodiment of this application may be a communications apparatus shown in FIG. 2.

When the communications apparatus shown in FIG. 2 is the first node, the processor 201 is configured to control and manage an action of the first node. For example, the processor 201 is configured to support the first node in performing steps 803 and 804 in FIG. 8 and steps 901 to 903 in FIG. 9, and/or an action performed by the first node in another process described in the embodiments of this application. The communications interface 204 is configured to support the first node in communicating with another network device, for example, communicating with the second node in FIG. 9. The memory 203 is configured to store program code and data of the first node.

When the communications apparatus shown in FIG. 2 is the second node, the processor 201 is configured to control and manage an action of the second node. For example, the processor 201 is configured to support the second node in performing steps 805 and 806 in FIG. 8 and steps 904 to 906 in FIG. 9, and/or an action performed by the second node in another process described in the embodiments of this application. The communications interface 204 is configured to support the second node in communicating with another network device, for example, communicating with the first node in FIG. 9. The memory 203 is configured to store program code and data of the second node.

An embodiment of this application further provides a computer readable storage medium, including an instruction. When the instruction is run on a computer, the computer is enabled to perform the foregoing methods.

An embodiment of this application further provides a computer program product including an instruction. When the computer program product is run on a computer, the computer is enabled to perform the foregoing methods.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

## Claims

1. A quality-of-service monitoring method, comprising:
sending (903), by a first node, a monitoring packet to a second node;
**characterized by** further comprising
either determining, by a first node, a service packet of a first service is not obtained within a preset time, and generating a monitoring packet, or obtaining (901), by the first node, the service packet of the first service, and
determining, by the first node, that the service packet of the first service is obtained within the preset time; and
encapsulating (902), by the first node, the service packet to obtain a monitoring packet, wherein the monitoring packet is usable for monitoring quality of service of the first service; wherein the monitoring packet is usable for at least one of: link connectivity monitoring, service transmission performance monitoring, and loopback monitoring on the first service
wherein the encapsulating (902), by the first node, the service packet comprises:
adding, by the first node, first indication information and first parameter information to the service packet, wherein the first indication information indicates that the monitoring packet is obtained by encapsulating the service packet, and the first parameter information is usable for determining monitoring the quality of service of the first service.

2. The method according to claim 1, wherein the monitoring packet comprises at least one of the following information: a protocol header in a same format as the service packet and a first field comprising the first indication information, wherein the first indication information indicates that the monitoring packet is obtained by encapsulating the service packet.

3. The method according to claim 1, wherein the monitoring packet comprises a protocol header in a same format as the service packet, the protocol header comprises the first indication information, and the first indication information indicates that the monitoring packet is obtained by encapsulating the service packet.

4. The method according to any one of claims 1 to 3, wherein the method further comprises:
learning of, by the first node from a control plane device, a generation manner of the monitoring packet, wherein the generation manner is generating the monitoring packet by using the service packet.

5. The method according to any one of claims 1 to 3, wherein the first node is a user plane function, UPF, device, and the first indication information is comprised in a protocol header of a general packet radio service tunneling protocol, GTP, layer of the monitoring packet; or the first node is a base station, the second node is a UPF device, and the first indication information is comprised in a protocol header of a GTP layer of the monitoring packet.

6. A quality-of-service monitoring apparatus, comprising means configured to perform the method according to any one of claims 1 to 5.

## Patentansprüche

1. Dienstgüteüberwachungsverfahren, das Folgendes umfasst:
Senden (903), durch einen ersten Knoten, eines Überwachungspakets an einen zweiten Knoten;
**dadurch gekennzeichnet, dass** es ferner Folgendes umfasst:
entweder Bestimmen, durch einen ersten Knoten, dass ein Dienstpaket eines ersten Dienstes nicht innerhalb einer vorgegebenen Zeit erhalten wird, und Erzeugen eines Überwachungspakets, oder Erhalten (901), durch den ersten Knoten, des Dienstpakets des ersten Dienstes und
Bestimmen, durch den ersten Knoten, dass das Dienstpaket des ersten Dienstes innerhalb der vorgegebenen Zeit erhalten wird; und
Einkapseln (902), durch den ersten Knoten, des Dienstpakets, um ein Überwachungspaket zu erhalten, wobei das Überwachungspaket zum Überwachen einer Dienstgüte des ersten Dienstes verwendbar ist; wobei das Überwachungspaket zur Verbindungskonnektivitätsüberwachung und/oder Dienstübertragungsleistungsfähigkeitsüberwachung und/oder Schleifenrückführungsüberwachung in dem ersten Dienst verwendbar ist,
wobei das Einkapseln (902), durch den ersten Knoten, des Dienstpakets Folgendes umfasst:
Hinzufügen, durch den ersten Knoten, von ersten Angabeinformationen und ersten Parameterinformationen zu dem Dienstpaket, wobei die ersten Angabeinformationen angeben, dass das Überwachungspaket durch Einkapseln des Dienstpakets erhalten wird, und die ersten Parameterinformationen zum Bestimmen des Überwachens der Dienstgüte des ersten Dienstes verwendbar sind.

2. Verfahren nach Anspruch 1, wobei das Überwachungspaket mindestens eine der folgenden Informationen umfasst: einen Protokollheader in einem gleichen Format wie das Dienstpaket und ein erstes Feld, das die ersten Angabeinformationen umfasst, wobei die ersten Angabeinformationen angeben, dass das Überwachungspaket durch Einkapseln des Dienstpakets erhalten wird.

3. Verfahren nach Anspruch 1, wobei das Überwachungspaket einen Protokollheader in einem gleichen Format wie das Dienstpaket umfasst, der Protokollheader die ersten Angabeinformationen umfasst und die ersten Angabeinformationen angeben, dass das Überwachungspaket durch Einkapseln des Dienstpakets erhalten wird.

4. Verfahren nach einem der Ansprüche 1 bis 3, wobei das Verfahren ferner Folgendes umfasst:
Erfassen, durch den ersten Knoten von einer Steuerebenenvorrichtung, einer Erzeugungsweise des Überwachungspakets, wobei die Erzeugungsweise das Überwachungspaket unter Verwendung des Dienstpakets erzeugt.

5. Verfahren nach einem der Ansprüche 1 bis 3, wobei der erste Knoten eine Benutzerebenenfunktions- bzw. UPF-Vorrichtung ist und die ersten Angabeinformationen in einem Protokollheader einer "General-Packet-Radio-Service-Tunneling-Protocol"- bzw. GTP-Schicht des Überwachungspakets enthalten ist; oder der erste Knoten eine Basisstation ist, der zweite Knoten eine UPF-Vorrichtung ist und die ersten Angabeinformationen in einem Protokollheader einer GTP-Schicht des Überwachungspakets enthalten ist.

6. Dienstgüteüberwachungseinrichtung, umfassend Mittel, die zum Durchführen des Verfahrens nach einem der Ansprüche 1 bis 5 ausgelegt sind.

## Revendications

1. Procédé de surveillance de la qualité de service, comprenant :
l'envoi (903), par un premier nœud, d'un paquet de surveillance à un deuxième noeud ; **caractérisé en ce qu'**il comprend en outre
soit la détermination, par un premier nœud, qu'un paquet de service d'un premier service n'est pas obtenu dans un laps de temps prédéfini, et la génération d'un paquet de surveillance, soit l'obtention (901), par le premier nœud, du paquet de service du premier service, et
la détermination, par le premier nœud, que le paquet de service du premier service est obtenu dans le laps de temps prédéfini ; et
l'encapsulation (902), par le premier nœud, du paquet de service afin d'obtenir un paquet de surveillance, le paquet de surveillance étant utilisable pour surveiller la qualité de service du premier service ; le paquet de surveillance étant utilisable pour :
la surveillance d'une connectivité de liaison et/ou la surveillance d'une performance de transmission de service et/ou la surveillance d'un bouclage sur le premier service, l'encapsulation (902), par le premier nœud, du paquet de service comprenant :
l'ajout, par le premier nœud, d'une première information d'indication et d'une première information de paramètre au paquet de service, la première information d'indication indiquant que le paquet de surveillance est obtenu par encapsulation du paquet de service, et la première information de paramètre étant utilisable pour déterminer la surveillance de la qualité de service du premier service.

2. Procédé selon la revendication 1, dans lequel le paquet de surveillance comprend au moins une des informations suivantes : un en-tête de protocole au même format que celui du paquet de service et un premier champ comprenant la première information d'indication, la première information d'indication indiquant que le paquet de surveillance est obtenu par encapsulation du paquet de service.

3. Procédé selon la revendication 1, dans lequel le paquet de surveillance comprend un en-tête de protocole au même format que celui du paquet de service, l'en-tête de protocole comprend la première information d'indication, et la première information d'indication indique que le paquet de surveillance est obtenu par encapsulation du paquet de service.

4. Procédé selon l'une quelconque des revendications 1 à 3, le procédé comprenant en outre :
la prise de connaissance, par le premier noeud auprès d'un dispositif de plan de commande, d'un mode de génération du paquet de surveillance, le mode de génération étant la génération du paquet de surveillance au moyen du paquet de service.

5. Procédé selon l'une quelconque des revendications 1 à 3, dans lequel le premier noeud est un dispositif de fonction de plan utilisateur, UPF, et la première information d'indication est contenue dans un en-tête de protocole d'une couche de protocole de tunnelisation du service général de radiocommunication en mode paquet, GTP, du paquet de surveillance ; ou le premier nœud est une station de base, le deuxième nœud est un dispositif UPF, et la première information d'indication est contenue dans un en-tête de protocole d'une couche GTP du paquet de surveillance.

6. Appareil de surveillance de la qualité de service, comprenant des moyens configurés pour réaliser le procédé selon l'une quelconque des revendications 1 à 5.
